# EUROPEAN PATENT APPLICATION

(11) **EP 4 726 510 A1**
(43) Date of publication of application: **15.04.2026**
(21) Application number: 25753774.6
(22) Date of filing: 20.08.2025
(51) Int. Cl.: G06F 3/01, G02B 27/01, G06F 3/00, G06V 40/20, G06F 3/048

(54) **ELECTRONIC DEVICE AND SERVICE PROVIDING METHOD**

(30) Priority: 22.08.2024 KR 20240112515; 14.10.2024 KR 20240139785
(71) Applicant: Samsung Electronics Co., Ltd, Suwon-si, Gyeonggi-do 16677 (KR)
(72) Inventor: CHUNG, Seonha, Suwon-si, Gyeonggi-do 16677 (KR); LEE, Seungjoon, Suwon-si, Gyeonggi-do 16677 (KR); LEE, Hyeonggeon, Suwon-si, Gyeonggi-do 16677 (KR)
(74) Representative: HGF
(86) International application number: PCT/KR2025/012610
(87) International publication number: WO 2026/043267

(57) **Abstract**

An electronic device worn on a head of a user of the disclosure may include a display, at least one camera, and at least one processor, wherein instructions stored in a memory, when executed individually or collectively by the at least one processor, may cause the electronic device to acquire, through the at least one camera, images corresponding to a field of view of a user wearing the electronic device, identify, based on the images, an object existing in a surrounding environment, identify, based on the images, the user's action related to the object, identify, based on the identified object and the identified action, an application to be provided, and display, through the display, an application execution screen at a position corresponding to the object in the field of view of the user.

## Description

### [Technical Field]

The disclosure relates to an electronic device and a method for providing a service.

### [Background Art]

In general, for example, an electronic device such as a head-mounted display device (HMD) is mounted on a part of the body, for example, the head, and displays an image. The head-mounted device may be formed in a goggle shape or a glasses shape.

The head-mounted display device may display information on an external object.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

In general, when a user wants display of information on an object external to an electronic device such as a head-mounted display device, the user needs to involve in the entire process of the display of the information, and thus it is difficult to acquire information related to the object.

An aspect of an electronic device and a service display method according to an embodiment of the disclosure is to display, based on a user's action and an object identified through a camera, information associated with the object.

An electronic device and service display method according to an embodiment of the disclosure can display a service related a user's action and an object, thereby enabling the user to acquire various information.

An electronic device according to an embodiment of the disclosure may include a display.

An electronic device according to an embodiment of the disclosure may include at least one camera.

An electronic device according to an embodiment of the disclosure may include at least one processor.

An electronic device according to an embodiment of the disclosure may include a memory.

Instructions stored in a memory according to an embodiment of the disclosure, when executed individually or collectively by the at least one processor, may cause the electronic device to acquire, through the at least one camera, images corresponding to a field of view of a user wearing the electronic device.

Instructions stored in a memory according to an embodiment of the disclosure, when executed individually or collectively by the at least one processor, may cause the electronic device to identify, based on the images, an object existing in a surrounding environment.

Instructions stored in a memory according to an embodiment of the disclosure, when executed individually or collectively by the at least one processor, may cause the electronic device to identify, based on the images, the user's action related to the object.

Instructions stored in a memory according to an embodiment of the disclosure, when executed individually or collectively by the at least one processor, may cause the electronic device to identify, based on the identified object and the identified action, an application to be provided.

Instructions stored in a memory according to an embodiment of the disclosure, when executed individually or collectively by the at least one processor, may cause the electronic device to display, through the display, an application execution screen at a position corresponding to the object in the field of view of the user.

A method for providing a service by an electronic device according to an embodiment of the disclosure may include acquiring, through at least one camera, images corresponding to a field of view of a user wearing the electronic device.

The method for providing a service by the electronic device according to an embodiment of the disclosure may include identifying, based on the images, an object existing in a surrounding environment.

The method for providing a service by the electronic device according to an embodiment of the disclosure may include identifying, based on the images, the user's action related to the object.

The method for providing a service by the electronic device according to an embodiment of the disclosure may include identifying, based on the identified object and the identified action, an application to be provided.

The method for providing a service by the electronic device according to an embodiment of the disclosure may include displaying, through the display, an application execution screen at a position corresponding to the object in the field of view of the user.

### [Brief Description of Drawings]

With regard to the description of the drawings, the same or like reference signs may be used to designate the same or like elements.
FIG. 1 is a block diagram illustrating an exemplary electronic device capable of performing operations described in the disclosure.
FIG. 2 is a block diagram illustrating an electronic device in a network environment according to an embodiment of the disclosure.
FIG. 3 illustrates an electronic device of the disclosure.
FIG. 4 illustrates a front surface of an electronic device according to an embodiment of the disclosure.
FIG. 5 illustrates a rear surface of an electronic device according to an embodiment of the disclosure.
FIG. 6 is a flowchart illustrating a method for providing a service by an electronic device according to an embodiment of the disclosure.
FIG. 7A illustrates an operation of recognizing an object in the real world and an action by an electronic device according to an embodiment of the disclosure.
FIG. 7B illustrates an operation of displaying a service, based on an object in the real world and an action, recognized by an electronic device according to an embodiment of the disclosure.
FIG. 8A illustrates a user's action and an object stored in a database of an electronic device according to an embodiment of the disclosure.
FIG. 8B illustrates a user's action and an object stored in a database of an electronic device according to an embodiment of the disclosure.
FIG. 8C illustrates an operation of recognizing an object in the real world and an action by an electronic device according to an embodiment of the disclosure.
FIG. 8D illustrates an operation of recognizing multiple objects in the real world and an action by an electronic device according to an embodiment of the disclosure.
FIG. 8E illustrates an operation of displaying, based on an identified object and user's action, an execution screen of an application by an electronic device according to an embodiment of the disclosure.
FIG. 9 is a flowchart illustrating an operation of changing a display area of an application bound with an object by an electronic device according to an embodiment of the disclosure.
FIG. 10A illustrates an operation of selecting an execution screen of an application bound with an object according to an embodiment of the disclosure.
FIG. 10B illustrates an operation of moving an execution screen of an application according to an embodiment of the disclosure.
FIG. 10C illustrates an operation of displaying a guide by an electronic device according to an embodiment of the disclosure.
FIG. 10D illustrates an operation of displaying an execution screen of an application bound with an object when the execution screen of the application moves to the position corresponding to a guide according to an embodiment of the disclosure.
FIG. 11 is a flowchart illustrating an operation of changing a display area of a service bound with an object by an electronic device according to an embodiment of the disclosure.
FIG. 12A illustrates a user action of causing an execution screen of an application selected according to a user input and an object to collide according to an embodiment of the disclosure.
FIG. 12B illustrates an operation of displaying, based on a user action of colliding with an object, an execution screen of an application bound to the surface of the object according to an embodiment of the disclosure.
FIG. 13 is a flowchart illustrating an operation of binding multiple applications with an object and displaying the same by an electronic device according to an embodiment of the disclosure.
FIG. 14A illustrates multiple applications being displayed by an electronic device according to an embodiment of the disclosure.
FIG. 14B illustrates at least one guide displayed through a display when a first application selected by an electronic device is moved to an object according to an embodiment of the disclosure.
FIG. 14C illustrates an operation in which a first application selected by an electronic device is bound with an object and displayed according to an embodiment of the disclosure.
FIG. 14D illustrates an operation in which multiple applications are bound with an object and displayed in an electronic device according to an embodiment of the disclosure.
FIG. 15 is a flowchart illustrating an operation of mapping an application being displayed to an object and/or an action in an electronic device according to an embodiment of the disclosure.
FIG. 16A illustrates an execution screen of an application being displayed by an electronic device according to an embodiment of the disclosure.
FIG. 16B illustrates a user action for an interaction between an execution screen of an application being displayed and an object according to an embodiment of the disclosure.
FIG. 16C illustrates an operation of displaying a call-to-action by an electronic device according to an embodiment of the disclosure.
FIG. 16D illustrates an operation of displaying a guide by an electronic device according to an embodiment of the disclosure.
FIG. 16E illustrates an operation in which an electronic device maps an execution screen of an application to an object and/or an action according to an embodiment of the disclosure.
FIG. 17 a flowchart illustrating an operation of mapping an object and/or an action to an application in an electronic device according to an embodiment of the disclosure.
FIG. 18 is a flowchart illustrating an operation of binding an object with an application in an electronic device according to an embodiment of the disclosure.
FIG. 19A illustrates a guide displayed on a display according to an execution screen of an application according to an embodiment of the disclosure.
FIG. 19B illustrates a case where an execution screen of an application stays, for a designated time interval, at a guide displayed on a display according to movement of the execution screen of the application according to an embodiment of the disclosure.
FIG. 19C illustrates a state in which an execution screen of an application is bound with a specific object according to an embodiment of the disclosure.

### [Mode for the Invention]

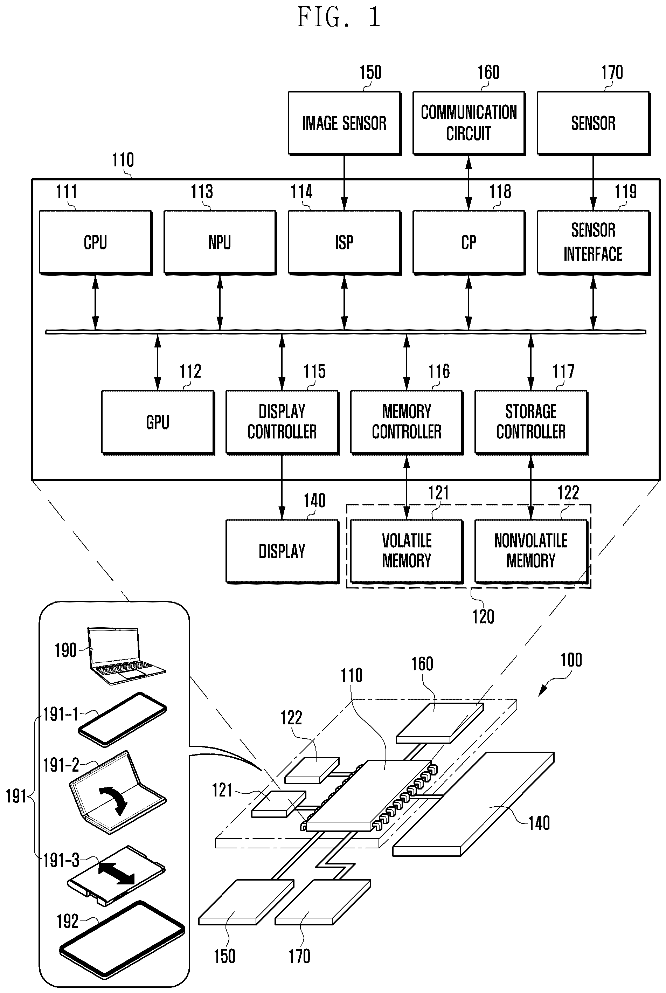

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

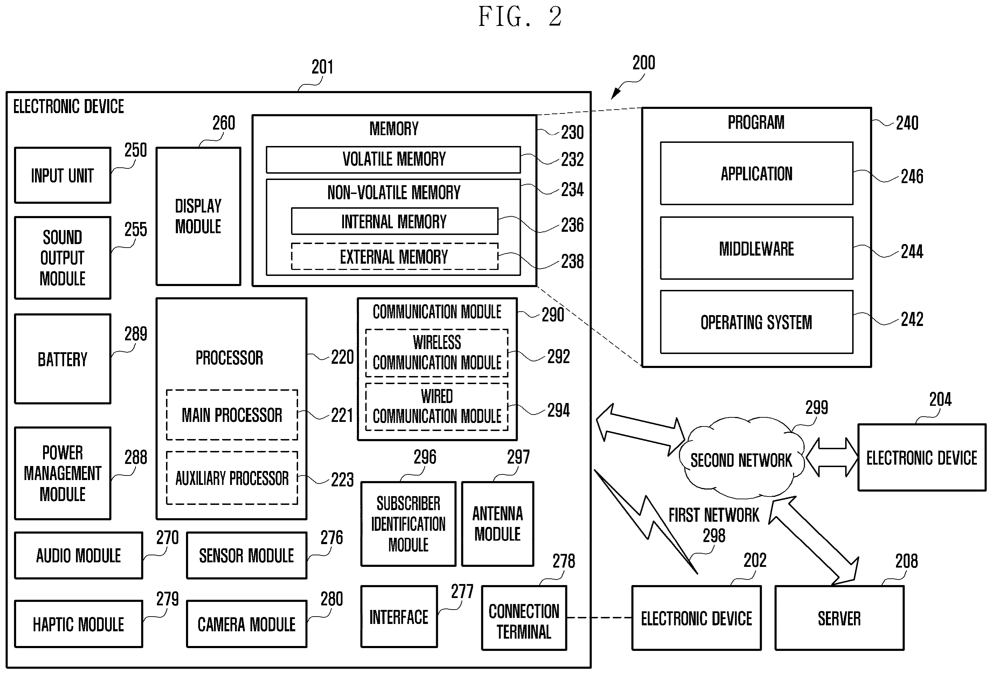

FIG. 2 is a block diagram illustrating an electronic device 200 in a network environment according to an embodiment of the disclosure.

Referring to FIG. 2, the electronic device 200 in the network environment may communicate with an electronic device 202 via a first network 298 (e.g., a short-range wireless communication network), or at least one of an electronic device 204 or a server 208 via a second network 299 (e.g., a long-range wireless communication network).

In an embodiment, the electronic device 200 may communicate with the electronic device 204 via the server 208.

In an embodiment, the electronic device 200 may include a processor 220 (e.g., the processor 110 of FIG. 1), memory 230 (e.g., the memory 120 of FIG. 1), an input circuit 250, a sound output circuit 255, a display 260 (e.g., the display 140 of FIG. 1), an audio circuit 270, a sensor 276 (e.g., the sensor 170 of FIG. 1), an interface 277, a connecting terminal 278, a haptic circuit 279, a camera 280, a power management circuit 288, a battery 289, a communication circuit 290, a subscriber identification circuit 296, or an antenna 297.

In an embodiment, at least one of the components (e.g., the connecting terminal 278) may be omitted from the electronic device 200, or one or more other components may be added in the electronic device 200. In some embodiments, some of the components (e.g., the sensor 276, the camera 280, or the antenna 297) may be implemented as a single component (e.g., the display 260).

The processor 220 may execute, for example, software (e.g., a program 240) to control at least one other component (e.g., a hardware or software component) of the electronic device 200 coupled with the processor 220, and may perform various data processing or computation. In an embodiment, as at least part of the data processing or computation, the processor 220 may store a command or data received from another component (e.g., the sensor 276 or the communication circuit 290) in volatile memory 232, process the command or the data stored in the volatile memory 232, and store resulting data in non-volatile memory 234. In an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor. For example, when the electronic device 200 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control, for example, at least some of functions or states related to at least one component (e.g., the display 260, the sensor 276, or the communication circuit 290) among the components of the electronic device 200, instead of the main processor 221 while the main processor 221 is in an inactive (e.g., sleep) state, or together with the main processor 221 while the main processor 221 is in an active (e.g., executing an application) state. In an embodiment, the auxiliary processor 223 (e.g., an image signal processor or a communication processor) may be implemented as part of another component (e.g., the camera 280 or the communication circuit 290) functionally related to the auxiliary processor. In an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 200 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor 276) of the electronic device 200. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input circuit 250 may receive a command or data to be used by another component (e.g., the processor 220) of the electronic device 200, from the outside (e.g., a user) of the electronic device 200. The input circuit 250 may include, for example, a microphone, a mouse, a keyboard, a key (e.g., a button), or a digital pen (e.g., a stylus pen).

The sound output circuit 255 may output sound signals to the outside of the electronic device 200. The sound output circuit 255 may include, for example, a speaker or a receiver. The speaker may be used for general purposes, such as playing multimedia or playing record. The receiver may be used for receiving incoming calls. In an embodiment, the receiver may be implemented as separate from, or as part of the speaker.

The display 260 may visually provide information to the outside (e.g., a user) of the electronic device 200. The display 260 may include, for example, a display, a hologram device, or a projector and control circuitry to control a corresponding one of the display, hologram device, and projector. In an embodiment, the display 260 may include a touch sensor adapted to detect a touch, or a pressure sensor adapted to measure the intensity of force incurred by the touch.

The audio circuit 270 may convert a sound into an electrical signal and vice versa. According to an embodiment, the audio circuit 270 may obtain the sound via the input circuit 250, or output the sound via the sound output circuit 255 or an external electronic device (e.g., an electronic device 202 (e.g., a speaker or a headphone)) directly or wirelessly coupled with the electronic device 200.

The sensor 276 may detect an operational state (e.g., power or temperature) of the electronic device 200 or an environmental state (e.g., a state of a user) external to the electronic device, and then generate an electrical signal or data value corresponding to the detected state. In an embodiment, the sensor 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 200 to be coupled with the external electronic device (e.g., the electronic device 202) directly or wirelessly. In an embodiment, the interface 277 may include, for example, a high definition multimedia interface (HDMI), a universal serial bus (USB) interface, a secure digital (SD) card interface, or an audio interface.

In an embodiment, the electronic device 202 may include a case of the electronic device 200.

In an embodiment, the electronic device 202 may be the same type of device as or a different type of device from the electronic device 200.

In an embodiment, all or part of the operations performed in the electronic device 200 may be performed in the electronic device 202. For example, in case that the electronic device 200 performs some functions or services automatically, or in response to a request from a user or other device, the electronic device 200 may request one or more external electronic devices (e.g., the electronic device 202) to perform at least part of the functions or the services, instead of or in addition to executing the functions or the services by itself. One or more external electronic devices (e.g., the electronic device 202) that have received the request may execute at least part of the requested functions or the requested services, or an additional function or additional service related to the request, and may deliver a result of the execution to the electronic device 200. The electronic device 200 may provide the result as it is or as processed additionally as at least part of a response to the request. For example, the electronic device 202 may render content data executed by the application and then may transmit the rendered content data to the electronic device 200, and the electronic device 200 may output the rendered content data to the display 260. When the electronic device 200 detects user movement through an inertial measurement unit (IMU) sensor or the like, the processor 220 of the electronic device 200 may correct the rendered content data received from the electronic device 202 based on the motion information and may output the corrected content data to the display 260. Alternatively, the processor 220 may transmit the motion information to the electronic device 202 and request rendering so that screen data is updated accordingly.

In an embodiment, the electronic device 202 may be various types of devices, including a case device that can store and charge the electronic device 200.

The connecting terminal 278 may include a connector via which the electronic device 200 may be physically connected with the external electronic device (e.g., the electronic device 202). In an embodiment, the connecting terminal 278 may include, for example, an HDMI connector, a USB connector, an SD card connector, or an audio connector (e.g., a headphone connector).

The haptic circuit 279 may convert an electrical signal into a mechanical stimulus (e.g., a vibration or a movement) or electrical stimulus which may be recognized by a user via his or her tactile sensation or kinesthetic sensation. In an embodiment, the haptic circuit 279 may include, for example, a motor, a piezoelectric element, or an electric stimulation device.

The camera 280 may capture a still image or moving images. In an embodiment, the camera 280 may include one or more lenses, image sensors, image signal processors, or flashes.

The power management circuit 288 may manage power supplied to the electronic device 200. In an embodiment, the power management circuit 288 may be implemented as at least part of, for example, a power management integrated circuit (PMIC).

The battery 289 may supply power to at least one component of the electronic device 200. In an embodiment, the battery 289 may include, for example, a primary cell which is not rechargeable, a secondary cell which is rechargeable, or a fuel cell.

The communication circuit 290 may support establishing a direct (e.g., wired) communication channel or a wireless communication channel between the electronic device 200 and the external electronic device (e.g., the electronic device 202, the electronic device 204, or the server 108) and performing communication via the established communication channel. The communication circuit 290 may include one or more communication processors that are operable independently from the processor 220 (e.g., the application processor (AP)) and supports a direct (e.g., wired) communication or a wireless communication.

According to an embodiment, the communication circuit 290 may include a wireless communication circuit 292 (e.g., a cellular communication circuit, a short-range wireless communication circuit, or a global navigation satellite system (GNSS) communication circuit) or a wired communication circuit 294 (e.g., a local area network (LAN) communication circuit or a power line communication (PLC) circuit). A corresponding one of these communication circuits may communicate with the external electronic device 204 via the first network 298 (e.g., a short-range communication network, such as Bluetooth^{™}, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication circuits may be implemented as a single component (e.g., a single chip), or may be implemented as multi components (e.g., multi chips) separate from each other. The wireless communication circuit 292 may identify or authenticate the electronic device 200 in a communication network, such as the first network 298 or the second network 299, using subscriber information (e.g., international mobile subscriber identity (IMSI)) stored in the subscriber identification circuit 296.

The wireless communication circuit 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication circuit 292 may support a high-frequency band (e.g., the mmWave band) to achieve, e.g., a high data transmission rate. The wireless communication circuit 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication circuit 292 may support various requirements specified in the electronic device 200, an external electronic device (e.g., the electronic device 204), or a network system (e.g., the second network 299). According to an embodiment, the wireless communication circuit 292 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna 297 may transmit or receive a signal or power to or from the outside (e.g., the external electronic device).

In an embodiment, the antenna 297 may include an antenna including a radiating element composed of a conductive material or a conductive pattern formed in or on a substrate (e.g., a printed circuit board (PCB)).

In an embodiment, the antenna 297 may include a plurality of antennas (e.g., array antennas). In such a case, at least one antenna appropriate for a communication scheme used in the communication network, such as the first network 298 or the second network 299, may be selected, for example, by the communication circuit 290 from the plurality of antennas. The signal or the power may then be transmitted or received between the communication circuit 290 and the external electronic device via the selected at least one antenna. According to some embodiments, another component (e.g., a radio frequency integrated circuit (RFIC)) other than the radiating element may be additionally formed as part of the antenna 297.

In an embodiment, the antenna 297 may form a mmWave antenna circuit.

In an embodiment, the mmWave antenna circuit may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

In an embodiment, commands or data may be transmitted or received between the electronic device 200 and the external electronic device 204 via the server 208 coupled with the second network 299. Each of the external electronic devices 202 or 204 may be a device of a same type as, or a different type, from the electronic device 200.

In an embodiment, all or some of operations to be executed at the electronic device 200 may be executed at one or more of the external electronic devices 202, 204, or 208. For example, if the electronic device 200 should perform a function or a service automatically, or in response to a request from a user or another device, the electronic device 200, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 200. The electronic device 200 may provide the outcome, with or without further processing of the outcome, as at least part of a reply to the request. To that end, a cloud computing, distributed computing, mobile edge computing (MEC), or client-server computing technology may be used, for example. The electronic device 200 may provide ultra-low-latency services using, e.g., distributed computing or mobile edge computing. In another embodiment, the external electronic device 204 may include an internet-of-things (IoT) device. The server 208 may be an intelligent server using machine learning and/or a neural network.

In an embodiment, the external electronic device 204 or the server 208 may be included in the second network 299. The electronic device 200 may be applied to intelligent services (e.g., smart home, smart city, smart car, or healthcare) based on 5G communication technology or IoT-related technology.

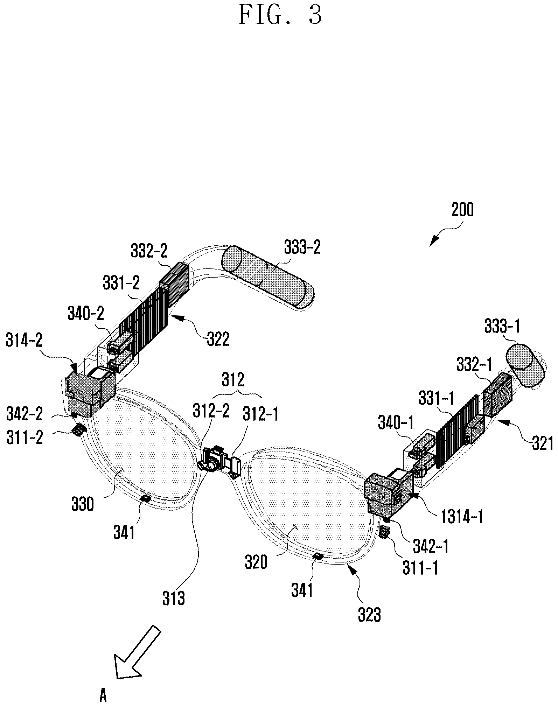

FIG. 3 illustrates an electronic device 200 of the disclosure.

An electronic device 200 of FIG. 3 may provide information to a user through displays 314-1 and 314-2 while seeing an external environment through glasses (e.g., a first glass 320 and a second glass 330).

In an embodiment, the electronic device 200 may include a frame 323 including displays 314-1 and 314-2 (e.g., the display 140 of FIG. 1), glasses 320 and 330, a camera (e.g., an image capturing camera 313, an eye tracking camera 312, and recognition cameras 311-1 and 311-2), microphones 341-1 and 341-2, and/or illumination sensors 342-1 and 342-2, and temples (e.g., a first temple 321 and/or a second template 322) including printed circuit boards 331-1 and 331-2, audio circuits 332-1 and 332-2, and/or batteries 333-1 and 333-2, and operatively connected to the frame through hinges 340-1 and 340-2.

In an embodiment, the displays 314-1 and 314-2 may provide visual information to the user through the glasses (e.g., the first glass 320 and the second glass 330). The electronic device 200 may include the first glass 320 corresponding to a left eye and/or the second glass 330 corresponding to a right eye.

In an embodiment, the displays 314-1 and 314-2 may include a display panel and/or a lens. For example, the display panel may include a transparent material such as glass or plastic.

In an embodiment, the displays 314-1 and 314-2 may include, for example, a liquid crystal display (LCD), a digital mirror device (DMD), a liquid crystal on silicon (LCoS), an organic light emitting diode (OLED), or a micro light emitting diode (micro LED).

Although not shown, in an embodiment, when the display 314-1 or 314-2 is one of an LCD device, a DMD device, or a LCoS display device, the electronic device 200 may include a light source for emitting light to a screen output area of the displays 314-1 or 314-2.

In an embodiment, when the display 314-1 or 314-1 can generate light by itself, for example, when the display is one of an organic light emitting diode or a micro LED, the electronic device 200 may provide a virtual image having a good quality to the user even through a separate light source is not included.

In an embodiment, when the display 314-1 or 314-2 is implemented as an OLED or a micro LED, a light source is unnecessary, which may lead to lightening of the electronic device 200.

In an embodiment, the electronic device 200 may include displays 314-1 and 314-2 and glasses (e.g., a first glass 320 and a second glass 330), and a user may use the electronic device while wearing the same on the face.

In an embodiment, the glass (e.g., the first glass 320 and the second glass 330) may be formed as a glass plate, a plastic plate, or a polymer, and may be transparently or translucently formed.

In an embodiment, the displays 314-1 or 314-2 may include a light-concentrating lens and/or a transparent waveguide positioned in a part of the glass (e.g., the first glass 320 and the second glass 330). For example, the waveguide may be at least partially positioned in the part of the glass.

In an embodiment, light emitted from the display 314-1 or 314-2 may be incident on one end of the glass through the first glass 320 and the second glass 330, and the incident light may be transmitted to the user through a waveguide and/or a transmission line (e.g., waveguide) formed in the glass. The waveguide may be made of glass, plastic, or polymer, and may include a nanopattern formed on one surface inside or outside the waveguide, for example, a polygonal or curved grating structure.

In an embodiment, the incident light may be propagated or reflected inside the waveguide by the nanopattern and provided to the user.

In an embodiment, the waveguide may include at least one of at least one diffractive element (e.g., a diffractive optical element (DOE) or a holographic optical element (HOE)) or a reflective element (e.g., a reflective mirror).

In an embodiment, the waveguide may guide a display light emitted from a light source to the user's eyes by means of at least one diffractive element or reflective element.

According to an embodiment, a virtual object output through the display 314-1 or 314-2 may include information related to an application program executed by the electronic device 200 and/or information related to an external object positioned in a real space corresponding to an area determined as a user's field of view (FoV). For example, the electronic device 200 may identify an external object included in at least a part corresponding to an area determined as a user's FoV from image information related to a real space, acquired through a camera (e.g., the image capturing camera 313). The electronic device 200 may output (or display), through an area determined as a user's FoV among a display area of the electronic device 200, the virtual object related to the external object identified in at least a part. The external object may include an object existing in the real space.

In an embodiment, a display area in which the electronic device 200 displays a virtual object may include a part of the display 314-1 or 314-2 (e.g., at least a part of a display panel).

In an embodiment, the display area may be positioned in a part of the first glass 320 and/or the second glass 330.

In an embodiment, the electronic device 200 is worn on a head part of the user, and may provide an image related to an augmented reality service to the user.

In an embodiment, the electronic device 200 may provide an augmented reality service of outputting at least one virtual object to be overlapped onto the area determined as the user's FoV. For example, the area determined as the user's FoV is an area determined to be recognized by the user wearing the electronic device 200 through the electronic device 200, and may include all or at least a part of the display 314-1 or 314-2 of the electronic device 200.

In an embodiment, the electronic device 200 may include multiple glasses (e.g., the first glass 320 and/or the second glass 330) corresponding to the user's both eyes (e.g., left eye and/or right eye), respectively. The multiple glasses may include at least a part of the displays 314-1 and 314-2. For example, the first display 314-1 may be included in the first glass 320 corresponding to the user's left eye, and the second display 314-2 may be included in the second glass 330 corresponding to the user's right eye. For example, the electronic device 200 may be formed of, but not limited to, a shape of at least one glasses, goggles, a helmet, or headwear.

In an embodiment, when the display 314-1 or 314-2 is a transparent uLED, a waveguide in the glass (e.g., the first glass 320 and the second glass 330) may be omitted. According to another embodiment, the display 314-1 or 314-2 may be formed of a transparent element, and the user may see through the display 314-1 or 314-2 and recognize a real space behind the display 314-1 or 314-2. The display 314-1 or 314-2 may display a virtual object in at least a part of the area of the transparent element such that the virtual object appears to the user to be added to at least a part of the real space.

In an embodiment, the electronic device 200 may include a virtual reality (VR) device (e.g., a virtual reality device). When the electronic device 200 is a VR device, the first glass 320 may be a first display 314-1, and the second glass 330 may be a second display 314-2.

According to an embodiment, the electronic device 200 may operate a first display panel included in the first glass 320 and a second display panel included in the second glass 330 as independent elements. For example, the electronic device 200 may determine, first configuration information, display performance of the first display panel, and may determine, based on second configuration information, display performance of the second display panel.

According to an embodiment, at least one camera may include an image capturing camera 313 for capturing an image corresponding to a user's field of view (FoV) and/or measuring a distance from an object, an eye tracking camera 312 for identifying a gaze direction which the user views, and/or a gesture camera 311-1 or 311-2 for recognizing a predetermined space.

In an embodiment, the electronic device 200 may include an image capturing camera 313 (e.g., an RGB camera) for capturing an image corresponding to a user's field of view (FoV) and/or measuring a distance from an object, an eye tracking camera 312 for identifying a gaze direction in which the user views, and/or a recognition camera 311-1 or 311-2 (e.g., a gesture camera) for recognizing a predetermined space.

In an embodiment, the electronic device 200 may measure a distance from an object positioned in a front view direction (e.g., direction A) of the user by using the image capturing camera 313.

In an embodiment, the electronic device 200 may have multiple eye tracking cameras 312 arrange to correspond to the user's both eyes. The eye tracking camera 312 may determine a gaze direction (e.g., pupil movement) of the user. For example, the eye tracking camera 312 may include a first eye tracking camera 312-1 for tracking a gaze direction of the user's left eye, and a second eye tracking camera 312-2 for tracking a gaze direction of the user's right eye.

In an embodiment, the electronic device 200 may determine a user's gesture within a pre-configured distance (e.g., a predetermined space) by using the recognition camera 311-1 or 311-2. For example, there may be multiple recognition cameras 311-1 and 311-2, and may be arranged at both side surfaces of the electronic device 200. The electronic device 200 may detect eyes corresponding to a dominant eye and a non-dominant eye by using at least one camera. For example, the electronic device may detect, based on the user's gaze direction towards an external object or a virtual object, eyes corresponding to a dominant eye and a non-dominant eye.

In an embodiment, the image capturing camera 313 may include a camera having a high resolution, such as a high resolution (HR) camera and a photo video (PV) camera. According to an embodiment, the eye tracking camera 312 may detect the user's pupil to track the gaze direction, and the detected pupil may be utilized so that the center of the virtual image moves to correspond to the gaze direction. For example, the eye tracking camera 312 may be divided into the first eye tracking camera 312-1 corresponding to the left eye and the second eye tracking camera 312-2 corresponding to the right eye, and the performance and the specification of the cameras may be substantially the same.

In an embodiment, the recognition camera 311-1 or 311-2 may be used for detecting a hand (gesture) of the user and recognize a space, and may include a global shutter (GS) camera. For example, the recognition camera 311-1 or 311-2 may include a GS camera having less image dragging, such as a rolling shutter (RS) camera to detect and track a fast hand operation and a minute movement of a finger, etc.

In an embodiment, the electronic device 200 may display, based on image information related to the real space acquired through the camera of the electronic device 200, a virtual object related to an augmented reality service together.

In an embodiment, the electronic device 200 may display, based on the displays 314-1 and 314-2 arranged to correspond to the user's both eyes, a virtual object.

In an embodiment, the electronic device 200 may display, based on pre-configured configuration information (e.g., a resolution, a frame rate, a brightness, and/or a display area), the virtual object.

The number and the positions of one or more cameras (e.g., the RGB camera 313, the eye tracking camera 312, and/or the gesture cameras 311-1 and 311-2) included in the electronic device 200 illustrated in FIG. 3 may not be limited. For example, the number and the positions of one or more cameras (e.g., the RGB camera 313, the eye tracking camera 312, and/or the gesture cameras 311-1 and 311-2) may vary based on the form (e.g., shape or size) of the electronic device 200.

In an embodiment, the electronic device 200 may include microphones 341-1 and 341-2 for receiving a user's voice and an ambient sound. For example, the microphone 341-1 or 341-2 may include an audio circuit. The electronic device 200 may include illumination sensors 342-1 and 342-2 for identifying the ambident brightness. For example, the illumination sensors 342-1 and 342-2 may be included in the sensor 170 of FIG. 1.

In an embodiment, the first temple 321 and/or the second temple 322 may include printed circuit boards 331-1 and 331-2 for transferring an electrical signal to each element of the electronic device 200, speakers 332-1 and 332-2 for outputting an audio signal, batteries 333-1 and 333-2, and/or hinges 340-1 and 340-2 for at least partial coupling to the frame 323 of the electronic device 200. According to an embodiment, the speakers 332-1 and 332-2 may include a first speaker 332-1 for transmitting an audio signal to the user's left ear, and a second speaker 332-2 for transmitting an audio signal to the user's right ear. The speaker 332-1 or 332-2 may include an audio circuit.

In an embodiment, the electronic device 200 may include multiple batteries 333-1 and 333-2, and may supply power to the printed circuit boards 331-1 and 331-2 through a power management module.

In an embodiment, the first template 321 and/or the second temple 322 may include printed circuit boards (PCBs) 331-1 and 331-2, speakers 332-1 and 332-2, and/or batteries 333-1 and 333-2. In an embodiment, the first temple 321 and/or the second temple 322 is a support member of the electronic device 200, and the first temple 321 and/or the second temple 322 may support the frame 323 so as to enable the electronic device 200 to be safely mounted on the body of the user when the user wears the same.

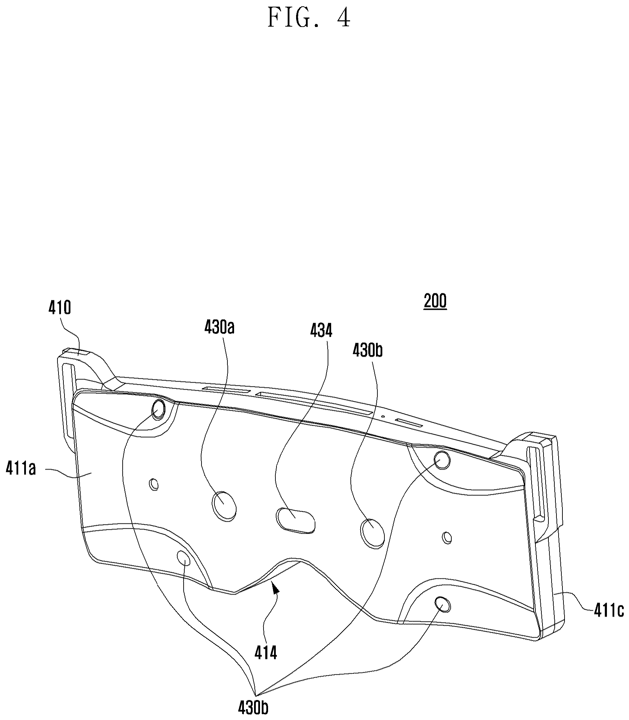

FIG. 4 illustrates a front surface of an electronic device 200 according to an embodiment of the disclosure.

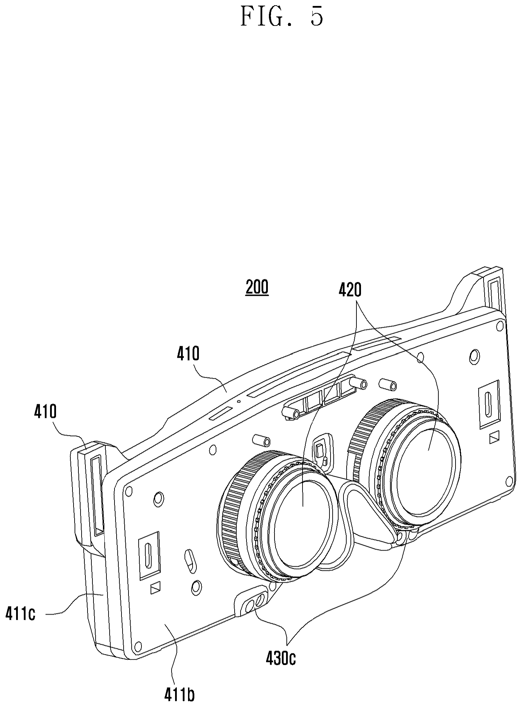

FIG. 5 illustrates a rear surface of an electronic device 200 according to an embodiment of the disclosure.

Referring to FIGS. 4 and 5, an electronic device 200 (e.g., the electronic device 100 of FIG. 1 or the electronic device 200 of FIG. 2) may be worn on a part of the body of a user and provide a user interface.

In an embodiment, the electronic device 200 may output a photo and/or an image to a user. Alternatively, the electronic device 200 may provide an image related to an augmented reality service and and/or a virtual reality service. For example, the electronic device 200 may provide an experience of augmented reality, virtual reality, mixed reality, and/or extended reality to the user.

For example, the electronic device 200 may provide augmented reality to the user. The electronic device 200 may transfer a virtual object image output from a display 140 toward the eye of the user, and data of a real world image obtained through multiple cameras 430a, 430b, and 430c for the virtual object image may be utilized for the virtual object image.

In an embodiment, the electronic device 200 may be, for example, a head-mounted display (HMD), and a face-mounted display (FMD), or may be smart glasses or a headset providing extended reality such as augmented reality (AR), virtual reality (VR), or mixed reality, and is not limited thereto.

In an embodiment, the electronic device 200 may include at least a part of a housing 410, multiple cameras 430a, 430b, and 430c, and a display 140.

In an embodiment, the electronic device 200 may include a housing 410. The housing 410 may be configured to accommodate at least one component. The housing 410 may include a first surface 411a (e.g., a front surface), a second surface 411b (e.g., a rear surface or a wearing surface) opposite to the first surface 411a, and a third surface 411c (e.g., a side surface) between the first surface 411a and the second surface 411b.

In an embodiment, the housing 410 may include a bridge 414. The bridge 414 may be configured to face a part (e.g., nose) of the body of the user. For example, the bridge 414 may be supported by the nose of the user.

In an embodiment, the electronic device 200 may include a lens structure 420. The lens structure 420 may include multiple lenses configured to adjust the focus of an image provided to the user. For example, the multiple lenses may be configured to adjust the focus of an image output by the display 140. The multiple lenses may be disposed at the position corresponding to the position of the display 140. The multiple lenses may include, for example, a Fresnel lens, a Pancake lens, a multi-channel lens, and/or any other appropriate lenses.

In an embodiment, the electronic device 200 may include a display 140. The display 140 may be configured to provide an image (e.g., a virtual image) to the user. For example, the display 140 may include a liquid crystal display (LCD), a digital mirror display device (DMD), a liquid crystal on silicon (LCoS), an organic light emitting diode (OLED), and/or a micro light emitting diode (micro LED).

In an embodiment, the display 140 may include a light source (not shown) configured to transmit an optical signal to an area in which an image is output.

In an embodiment, the display 140 may generate an optical signal by itself to provide an image to the user.

In an embodiment, the display 140 may be disposed on the second surface 411b of the housing 410. For example, a surface of a pair of lenses of the display 140 may be positioned to be exposed through the second surface 411b.

In an embodiment, the display 140 may include for example, a liquid crystal display (LCD), a digital mirror device (DMD), a liquid crystal on silicon (LCoS), an organic light emitting diode (OLED), an organic light emitting diode on silicon (OLEDoS), or a micro light emitting diode (micro LED).

In an embodiment, the display 140 may be configured as an organic light emitting diode (OLED). For example, the OLED may represent red (R), green (G), and blue (B) through self-emission from organic materials. However, the disclosure is not limited thereto, one pixel may include R, G, and B, and one chip may be implemented as multiple pixels including R, G, and B.

In an embodiment, the display 140 may display various images. Here, the image is a concept including a still image and a moving image, and the display 140 may display various images such as broadcasting content and multimedia content. In addition, the display 140 may also display a user interface (UI) and an icon.

In an embodiment, the display 140 may include a separate IC chip, and the IC chip may display an image based on an image signal received from the processor 110. In an embodiment, the IC chip may generate driving signals of multiple light emitting devices based on the image signal received from the processor 110, and may control, based on the driving signals, light emission of multiple pixels included in a display panel, so as to display the image.

In an embodiment, the display 140 may include multiple pixels for displaying a virtual image. The display 140 may further include infrared pixels for emitting infrared light.

In an embodiment, the display 140 may be disposed between pixels, and may further include a light receiving pixel (e.g., a photo sensor pixel) for receiving light reflected from the eye of the user and converting and outputting the received light to electrical energy. The light receiving pixel may be referred to as an "eye tracking sensor". The eye tracking sensor may detect infrared light obtained when light emitted by an infrared pixel included in the display 140 is reflected by the eye of the user.

In an embodiment, the electronic device 200 may detect the eye direction (e.g., pupil movement) of the user through light receiving pixels.

In an embodiment, the electronic device 200 may determine the position of the center of the virtual image along the gaze direction (e.g., the direction in which the pupil of the left eye and the right of the user stares) of the left eye and the right eye of the user, detected through one or more light receiving pixels.

In an embodiment, the display 140 may include a light-concentrating lens and/or a transparent waveguide. For example, the transparent waveguide may be at least partially positioned at a part of a glass.

In an embodiment, light emitted from the display 140 may be incident on one end of the glass, and the incident light may be transmitted to the user through a waveguide and/or a transmission line (e.g., waveguide) formed in the glass. The waveguide may be made of glass, plastic, or polymer, and may include a nanopattern formed on one surface inside or outside the waveguide, for example, a polygonal or curved grating structure.

In an embodiment, the incident light may be propagated or reflected inside the waveguide by the nanopattern and provided to the user.

In an embodiment, the waveguide may include at least one of at least one diffractive element (e.g., a diffractive optical element (DOE) or a holographic optical element (HOE)) or a reflective element (e.g., a reflective mirror).

In an embodiment, the waveguide may guide a display light emitted from a light source to the user's eyes by means of at least one diffractive element or reflective element.

In an embodiment, the waveguide transmits light generated from the display to the user's eye.

In an embodiment, the waveguide may be made of glass, plastic, or polymer, and may include a nanopattern formed on one surface inside or outside the waveguide, for example, a polygonal or curved grating structure.

In an embodiment, light incident to one end of the waveguide may be propagated inside an optical waveguide of the display 140 by a nanopattern and provided to the user. In addition, light incident to an optical waveguide configured as a free-form prism may be provided to the user through a reflective mirror. The optical waveguide may include at least one of at least one diffractive element (e.g., a diffractive optical element (DOE) or a holographic optical element (HOE)) or a reflective element (e.g., a reflective mirror). The optical waveguide may guide a display light emitted from a light source to the user's eyes by means of at least one diffractive element or reflective element.

In an embodiment, the diffractive element may include an input optical member/output optical member (not shown). For example, the input optical member may mean an input grating area, and the output optical member (not shown) may mean an output grating area. The input grating area may serve as an input terminal for diffracting (or reflecting) light to transmit light output from a micro light emitting diode (e.g., micro LED) to a transparent member (e.g., a first transparent member or a second transparent member) of a screen display unit. The output grating area may serve as an exit for diffracting (or reflecting) light, to the user's eye, transmitted to a transparent member (e.g., a first transparent member or a second transparent member) of the waveguide.

In an embodiment, the reflective element may include a total internal reflection (TIR) optical element or a total internal reflection waveguide for total internal reflection. For example, the total internal reflection is a method of guiding light, and may mean generating an incident angle so that light (e.g., a virtual image) input through the input grating area is 100% reflected on one surface (e.g., a specific surface) of the waveguide and is 100% transmitted to the output grating area.

In an embodiment, light emitted from the display may be guided to the waveguide through the input optical member. The light moving inside the waveguide may be guided in the user's eye direction through the output optical member. The screen display unit may be determined based on the light emitted to the eye direction.

In an embodiment, the electronic device 200 may include a sensor 170. The sensor 170 may be configured to detect the depth of a subject. The sensor 170 may be configured to transmit a signal toward the subject and/or receive the signal from the subject. For example, the transmission signal may include near-infrared, ultrasound, and/or laser. The sensor 170 may be configured to measure a time of flight (ToF) of the signal to measure the distance between the electronic device 200 and the subject. The sensor 170 may be disposed on the first surface 411a of the housing 410.

In an embodiment, the multiple cameras 430a, 430b, and 430c may include at least a part of multiple front cameras 430a and 430b and a face recognition camera 430c. The multiple cameras 430a, 430b, and 430c may capture an image of the outside of the housing 410, for example, a user and/or other subject. For example, the multiple cameras 430a, 430b, and 430c may convert the optical signal into input data and provide the same to the processor 110.

In an embodiment, the processor 110 may receive the transmitted input data and transfer output data to the display 140. The processor 110 may combine data input from each of the multiple cameras 430a, 430b, and 430c, and process the combined data to control the display 140.

In an embodiment, the multiple front cameras 430a and 430b may be arranged on the first surface 411a of the housing 410 to be spaced apart from each other, and capture images in the direction in which the third surface 411a of the housing 410 faces. The multiple front cameras may include at least one first camera 430a and at least one fourth camera 430b.

In an embodiment, the first camera 440 may include at least one third camera 430a and at least one fourth camera 430b.

In an embodiment, the multiple front cameras 430a and 430b may be arranged on the first surface 411a of the housing 410 to be spaced apart from each other. The multiple front cameras 430a and 430b may be arranged to face different directions from each other to capture images in various directions such as the first surface 411a or the third surface 411c.

In an embodiment, the third camera 430 may be configured to obtain an image from a subject. Multiple third cameras 430a may be formed, and a first camera 430a among the multiple third cameras 430a may be disposed in a partial area of the first surface 411a of the housing 410, and the other first camera 430a may be disposed in other area of the housing 410, which is different from a first part of the first surface 411a of the housing 410. The multiple third cameras 430a may be arranged at both sides of the sensor 170, respectively. The multiple third cameras 430a may include an image stabilizer actuator (not shown) and/or an auto-focus actuator (not shown). For example, the multiple third cameras 430a may include at least one of or a combine of a camera configured to obtain a color image, a global shutter camera, and a rolling shutter camera.

In an embodiment, the fourth camera 430b may be configured to recognize a subject. Multiple fourth cameras 430b may be formed, and the multiple fourth cameras 430b may be configured to detect and/or track an object (e.g., a human head or hand) having 3 degrees of freedom or 6 degrees of freedom or a space. For example, the multiple fourth cameras 430b may include a global shutter camera. The multiple fourth camera 430b may be configured to perform simultaneous localization and mapping (SLAM) by using depth information of the subject. The multiple second cameras 430b may be configured to recognize the subject's gesture.

In an embodiment, the multiple fourth cameras 430b may be arranged on the first surface 411a of the housing 410.

In an embodiment, the multiple front cameras 430a and 430b may be an image capturing camera, may be referred to as high resolution (HR) or photo video (PV), and may include a high-resolution camera. The multiple front cameras 430a and 430b may include a color camera including functions for obtaining an image having a high quality, such as an auto focus (AF) function and an optical image stabilizer (OIS). The disclosure is not limited thereto, and the multiple front cameras 430a and 430b may include a global shutter (GS) camera or a rolling shutter (RS) camera.

In an embodiment, the electronic device 200 may include multiple fifth cameras 430c. The multiple fifth cameras 430c may be configured to recognize the user's face. For example, the multiple fifth cameras 430c may be configured to detect and track the user's face expression.

In an embodiment, the electronic device 200 may further include an eye tracking camera in at least a part of the multiple fifth cameras 430c. The eye tracking camera may be used to detect and track the pupil.

In an embodiment, at least one of the multiple cameras 430a, 430b, and 430c may include a camera used for 3 degrees of freedom (DoF) or 6 degrees of freedom (DoF) head tracking, hand detection and tracking, gesture recognition, and/or spatial recognition.

In an embodiment, at least one of the multiple cameras 430a, 430b, and 430c may include a global shutter (GS) to detect a movement of the head and hand and track the movement. For example, for head tracking and space recognition, a stereo camera may be used, two global shutter (GS) cameras having the same specification and performance can thus be used, and a rolling shutter (RS) camera may be used to detect a fast hand operation and a minute movement of a finger, or the like and track the movement.

In an embodiment, at least one of the multiple cameras 430a, 430b, and 430c may be used as a global shutter (GS) camera having a superior performance (e.g., image dragging) compared to the camera, the disclosure is not limited thereto, and for example, a rolling shutter (RS) camera may be used. At least one of the multiple cameras 430a, 430b, and 430c may perform a simultaneous localization and mapping (SLAM) function through depth imaging for 6 degrees of freedom (DoF) or space recognition. At least one of the multiple cameras 430a, 430b, and 430c may also perform a user gesture recognition function.

In an embodiment, the electronic device 200 may an inertial measurement unit (IMU) sensor. The IMU sensor may include at least one of an acceleration sensor, a gyroscope, or a magnetometer. The electronic device 200 may detect the user's movement based on the IMU sensor.

In an embodiment, although not shown, the electronic device 200 may include at least a part of a sensor (not shown), a lighting unit (not shown), multiple microphones (not shown), multiple speakers (not shown), a battery (not shown), and a printed circuit board (not shown).

In an embodiment, one or more sensors (not shown) may exist for various purposes (e.g., gyro sensor, acceleration sensor, magnetometer, and/or a gesture sensor), and for example, the sensor (not shown) may perform at least one of head tracking for 6 degrees of freedom (DoF), motion detection and pose estimation and prediction, gesture and/or spatial recognition, and/or SLAM using depth imaging.

In an embodiment, the lighting unit (not shown) may have various usages according to the position of attachment. For example, the lighting unit (not shown) may be attached around the second surface 411b of the electronic device 200. The lighting unit (not shown) may be used as an auxiliary means for facilitating eye gaze detection when an eye tracking camera (not shown) captures an image of the pupil. The lighting unit (not shown) may use an infrared light emitting device (IR LED) having a wavelength in the visible or infrared range.

For example, the lighting unit (not shown) may be attached to or around the front surface 411a of the electronic device 200. The lighting unit (not shown) may be used as a means for supplementing the ambient brightness when the multiple front cameras 430a and 430b capture images. The lighting unit (not shown) may be used particularly when it is difficult to detect a subject to be captured due to a dark environment or the mixture of multiple light sources and reflected light.

In an embodiment, the lighting unit (not shown) may be omitted. The lighting unit (not shown) may be substituted by an infrared pixel included in the display 140. The lighting unit (not shown) may be included in the electronic device 200 to assist the infrared pixel included in the display 140.

In an embodiment, the multiple microphones (not shown) may process an external sound signal into electrical voice data. The processed voice data may be utilized in various manners according to a function performed (or an application running) in the electronic device 200.

In an embodiment, the multiple speakers (not shown) may output audio data received from a communication circuit or stored in the memory 120.

In an embodiment, one or more batteries (not shown) may be included in the electronic device 200, and may support power to elements substituting the electronic device 200.

In an embodiment, the printed circuit board (not shown) may transfer an electrical signal to each circuit (e.g., camera, display audio, or sensor) and other printed circuit board through a flexible printed circuit board (FPCB).

In an embodiment, a control circuit (not shown) for controlling the elements constituting the electronic device 200 may be positioned on the printed circuit board (not shown).

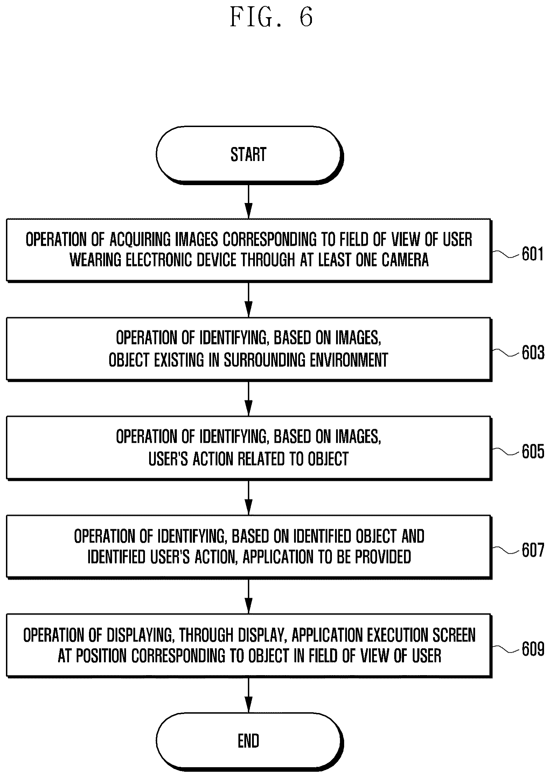

FIG. 6 is a flowchart illustrating a method for providing a service by an electronic device 200 according to an embodiment of the disclosure.

In an embodiment, the electronic device 200 may include a memory 120 storing instructions, and at least one processor 110.

In an embodiment, in operation 601, instructions stored in the memory 120 may cause, when executed individually or collectively by the at least one processor 110, the electronic device 200 to acquire images corresponding to a field of view of a user wearing the electronic device 200 through at least one camera (e.g., an RGB camera or a depth camera).

In an embodiment, in operation 601, the instructions stored in the memory 120 may cause, when executed individually or collectively by the at least one processor 110, the electronic device 200 to detect, based on information acquired through an inertial measurement unit (IMU) sensor, whether the user is wearing the electronic device.

For example, the at least one camera may include the image capturing camera 313 and the recognition cameras 311-1 and 311-2 of FIG.3 or the multiple front cameras 430a and 430b of FIG. 4. However, the disclosure is not limited thereto, and the at least one camera may include the image sensor 150 of FIG. 1. The at least one camera may include a vision sensor. The at least one camera may include, for example, an RGB camera and/or a depth camera.

In an embodiment, the electronic device 200 may include a video see through (VST) device. In a video see through device the device may display an image to the user which is comprised of both a live video of the surrounding environment and virtual elements. In an embodiment, the electronic device 200 may include an optical see through (OST) device. In an optical see through device the display may be partially transparent, so that parts of a surrounding environment can be seen through the display while virtual elements are displayed on the display.

In an embodiment, in operation 603, the instructions stored in the memory may cause, when executed individually or collectively by the at least one processor 110, the electronic device 200 to identify, based on images, an object existing in an ambient environment.

In an embodiment, an object may be independent presence which can be recognized through human senses and has a physical entity in the real world.

In an embodiment, the electronic device 200 may store a computer program for object recognition and/or a computer program for action recognition.

In an embodiment, the computer program (e.g., an artificial intelligence engine) for object recognition may include at least one of a depth information generation model and an object recognition/classification model.

In an embodiment, the computer program (e.g., an artificial intelligence engine) for action recognition may include at least one of a depth information generation model and an object recognition/classification model.

In an embodiment, the depth information generation model (e.g., the artificial intelligence engine) may generate a depth map for an image to be edited, under the control of the processor 110. The depth information generation model may include a generative artificial intelligence computer program and/or a general artificial intelligence computer program. A depth map may include information related to a surface distance of an object included in an image from a view point. The depth information generation model may be an artificial intelligence computer program trained to calculate depth information from a single-sheet image.

In an embodiment, the object recognition/classification model (e.g., the artificial intelligence engine) may perform image segmentation under the control of the processor 110. The object recognition/classification model may detect and classify an object from a real-world image through segmentation under the control of the processor 110. The object recognition/classification model may identify information on at least one object detected in the real-world image under the control of the processor 110. The object recognition/classification model may perform a segmentation operation only for an object corresponding to classification of a designated object under the control of the processor 110.

In an embodiment, in operation 605, the instructions stored in the memory 120 may cause, when executed individually or collectively by at least one processor 110, the electronic device 200 to identify, based on images, a user's action related to the object. In an embodiment, in operation 605, the instructions stored in the memory 120 may cause, when executed individually or collectively by the at least one processor 110, the electronic device 200 to identify information on a place.

For example, the electronic device 200 may identify, through a wireless communication circuit 292 such as a global navigation satellite system (GNSS) communication circuit, a Wi-Fi communication circuit, and/or a cellular communication circuit or a wired communication circuit 294, a place in which the electronic device 200 is being used, and whether the place is an indoor or outdoor place.

In an embodiment, in operation 607, the instructions stored in the memory 120 may cause, when executed individually or collectively by the at least one processor 110, the electronic device 200 to identify, based on the identified object and the identified user's action, an application to be provided.

In an embodiment, in operation 607, the instructions stored in the memory 120 may cause, when executed individually or collectively by the at least one processor 110, the electronic device 200 to identify, based on at least one of the identified object, the identified user's action, and the identified place, an application to be provided.

In an embodiment, in operation 607, the instructions stored in the memory 120 may cause, when executed individually or collectively by the at least one processor 110, the electronic device 200 to identify, based on the identified object and the identified user's action, a service to be provided (e.g., an application and content or control interface).

In an embodiment, in operation 607, the instructions stored in the memory 120 may cause, when executed individually or collectively by the at least one processor 110, the electronic device 200 to identify, based on at least one of the identified object, the identified user's action, and the identified place, a service to be provided (e.g., an application and a content or control interface).

In an embodiment, in operation 607, the instructions stored in the memory 120 may cause, when executed individually or collectively by the at least one processor 110, the electronic device 200 to identify, based on the object and the identified user's action, an application to be provided, from a database. In an embodiment, in operation 607, the instructions stored in the memory 120 may cause, when executed individually or collectively by the at least one processor 110, the electronic device 200 to identify, based on at least one of the identified object, the identified user's action, and the identified place, an application to be provided, from a database.

In an embodiment, a database of an object may be stored in the memory 120 of the electronic device 200 in advance.

However, the disclosure is not limited thereto, and the database of the object may be stored in a server (e.g., the server 208 of FIG. 2) and/or a memory of an external electronic device (e.g., the electronic device 202 of FIG. 2) in advance.

In an embodiment, the database of the object may be stored in the server (e.g., the server 208 of FIG. 2) and/or the memory of the external electronic device (e.g., the electronic device 202 of FIG. 2), and the electronic device 200 may transmit information on the identified object to the server (e.g., the server 208 of FIG. 2) and/or the external electronic device (e.g., the electronic device 202 of FIG. 2) through a communication circuit (e.g., the communication circuit 290 of FIG. 2).

In an embodiment, the server (e.g., the server 208 of FIG. 2) and/or the external electronic device (e.g., the electronic device 202 of FIG. 2) may identify whether the information on the identified object is included in the database of the object, and transmit, to the electronic device 200, information on whether the information on the identified object is included in the database of the object.

In an embodiment, a database of a user's action may be stored in the memory 120 of the electronic device 200 in advance.

However, the disclosure is not limited thereto, and the database of the user's action may be stored in a server (e.g., the server 208 of FIG. 2) and/or a memory of an external electronic device (e.g., the electronic device 202 of FIG. 2) in advance.

In an embodiment, when the database of the user's action is stored in the server (e.g., the server 208 of FIG. 2) and/or the memory of the external electronic device (e.g., the electronic device 202 of FIG. 2), the electronic device 200 may transmit information on the identified user's action to the server (e.g., the server 208 of FIG. 2) and/or the external electronic device (e.g., the electronic device 202 of FIG. 2) through a communication circuit (e.g., the communication circuit 290 of FIG. 2).

In an embodiment, the server (e.g., the server 208 of FIG. 2) and/or the external electronic device (e.g., the electronic device 202 of FIG. 2) may identify whether information on the identified user's action is included in the database of the user's action, and transmit, to the electronic device 200, whether the information on the identified user's action is included in the database of the user's action.

In an embodiment, a database of a place may be stored in the memory 120 of the electronic device 200 in advance.

However, the disclosure is not limited thereto, and the database of the place may be stored in a server (e.g., the server 208 of FIG. 2) and/or a memory of an external electronic device (e.g., the electronic device 202 of FIG. 2) in advance.

In an embodiment, when the database of the place is stored in the server (e.g., the server 208 of FIG. 2) and/or the memory of the external electronic device (e.g., the electronic device 202 of FIG. 2), the electronic device 200 may transmit information on the place to the server (e.g., the server 208 of FIG. 2) and/or the external electronic device (e.g., the electronic device 202 of FIG. 2) through a communication circuit (e.g., the communication circuit 290 of FIG 2).

In an embodiment, the server (e.g., the server 208 of FIG. 2) and/or the external electronic device (e.g., the electronic device 202 of FIG. 2) may identify whether information on the place is included in the database of the place, and transmit, to the electronic device 200, whether the information on the place is included in the database of the place.

For example, the service may include at least one of a content screen, a virtual panel interface, a control screen interface, or an application execution screen.

In an embodiment, when the identified object corresponds to a water glass and the identified user's action is an action of holding up the object, a head-mounted display 200 may identify an application for the water glass and the action of holding up the water glass from a database. For example, the application for the water glass and the action of holding of the water glass may include an execution screen of a healthcare application.

In an embodiment, when the identified object corresponds to a water glass and the identified user's action corresponds to an action of holding up the object, the head-mounted display 200 may identify a service for the water glass and the action of holding of the water glass from a database. For example, the service for the water glass and the action of holding up the water glass may include an execution screen of a healthcare application.

In an embodiment, in operation 609, the instructions stored in the memory 120 may cause, when executed individually or collectively by the at least one processor 110, the electronic device 200 to display an execution screen of an application at the position corresponding to the object in the user's field of view through a display (e.g., the display 260 of FIG. 2).

In an embodiment, in operation 609, the instructions stored in the memory 120 may cause, when executed individually or collectively by the at least one processor 110, the electronic device 200 to display a service at the position corresponding to the object in the user's field of view through the display (e.g., the display 260 of FIG. 2).

For example, binding the execution screen of the application with the object and displaying the same may include displaying the service in an area adjacent to the object or on a surface of the object. Binding the execution screen of the application with the object and displaying the same may include moving the execution screen of the application being displayed through the display (e.g., the display 260 of FIG. 2) according to the movement of the object in the real world.

Binding the execution screen of the application with the object may comprise: determining a first position, the first position being determined with respect to the object; and displaying the execution screen at the first position. Binding the execution screen of the application with the object may further comprise: detecting a movement of the object relative to the user; determining a second position, the second position being determined with respect to the object; and displaying the execution screen at the second position. The first position and the second position may be determined with respect to the object using the same predefined rules.

For example, binding the service with the object and displaying the same may include displaying the service in an area adjacent to the object or on a surface of the object. Binding the service with the object and displaying the same may include moving together the service being displayed through the display (e.g., the display 260 of FIG. 2) according to the movement of the object in the real world.

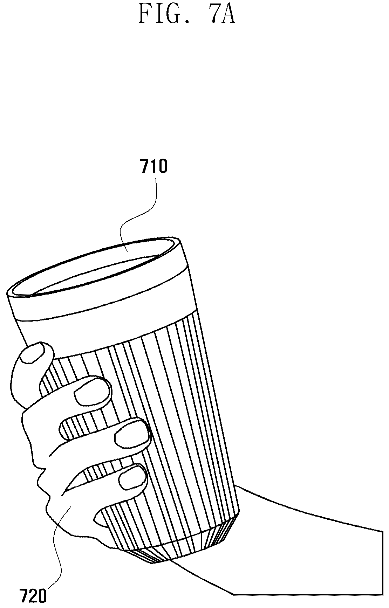

FIG. 7A illustrates an operation of recognizing an object in the real world and an action by an electronic device 200 according to an embodiment of the disclosure.

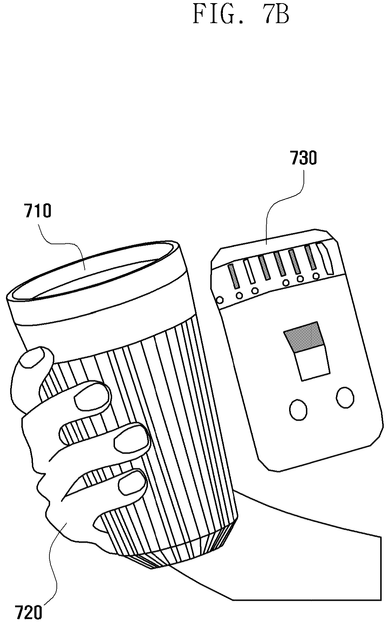

FIG. 7B illustrates an operation of displaying a service, based on an object in the real world and an action, recognized by an electronic device 200 according to an embodiment of the disclosure.

Referring to FIGS. 7A and 7B, the electronic device 200 may acquire images in the real world through at least one camera (e.g., an RGB camera or a depth camera).

In an embodiment, the electronic device 200 may identify an object (e.g., a cup) 710 included in the acquired images in the real world and a user's action (e.g., holding a cup) 720.

In an embodiment, the electronic device 200 may identify, under the control of the processor 110, the object (e.g., cup) 710 and the user's action (e.g., holding a cup) 720 from the acquired real-world images by using a computer program of object recognition and/or a computer program for action recognition, stored in the memory 120.

In an embodiment, the electronic device 200 may identify, under the control of the processor 110, whether data corresponding to the identified object (e.g., cup) 710 and user's action (e.g., holding a cup) 720 is in a database of an object and/or a database of a user's action.

In an embodiment, when the data corresponding to the identified object (e.g., cup) 710 and user's action (e.g., holding a cup) 720 is in the database for the object and/or the database for the user's action, the electronic device 200 may identify, under the control of the processor 110, a service 730 corresponding to the identified object (e.g., cup) 710 and the identified user's action (e.g., holding a cup) 720.

In an embodiment, when the data corresponding to the identified object (e.g., cup) 710 and user's action (e.g., holding a cup) 720 is in the database of the object and/or the database of the user's action, the electronic device 200 may identify, under the control of the processor 110, an application 730 corresponding to the identified object (e.g., cup) 710 and the identified user's action (e.g., holding a cup) 720.

In an embodiment, the instructions stored in the memory 120 may cause, when executed individually or collectively by the at least one processor 110, the electronic device 200 to bind the identified service 730 with the identified object (e.g., cup) 710 in the field of view to display the same on the display (e.g., the display 260 of FIG. 2).

In an embodiment, the identified application 730 may vary according to a place.

In an embodiment, the identified service 730 may vary according to a place.

For example, the electronic device 200 may identify the cup 710 as an object, and identify an action of holding a cup as the user's action 720. When a place in which the electronic device 200 is used is home, the electronic device 200 may identify an execution screen related to drinking water as the service 730 from a healthcare application. When a place in which the electronic device 200 is used is a fitness center, the electronic device 200 may identify an execution screen related to the exercise amount and rest management as the service 730 from the healthcare application.

For example, the electronic device 200 may identify the cup 710 as an object and identify an action of holding the cup as a user's action 720. When a place in which the electronic device 200 is used is home, the electronic device 200 may identify an execution screen 730 related to drinking water from a healthcare application. When a place in which the electronic device 200 is used is a fitness center, the electronic device 200 may identify an execution screen 730 related to the exercise amount and rest management from the healthcare application.

For example, the electronic device 200 may identify a book as an object and an action of holding and opening a book as a user's action. When a place in which the electronic device 200 is used is a library, the electronic device 200 may identify an execution screen related to a dictionary as a service. When a place in which the electronic device 200 is used is a bookstore, the electronic device 200 may identify an execution screen related to book purchase as a service.

For example, the electronic device 200 may identify a book as an object and identify an action of holding and opening a book as a user's action. When a place in which the electronic device 200 is used is a library, the electronic device 200 may identify an execution screen related to a dictionary application. When a place in which the electronic device 200 is a bookstore, the electronic device 200 may identify an execution screen related to book purchase.

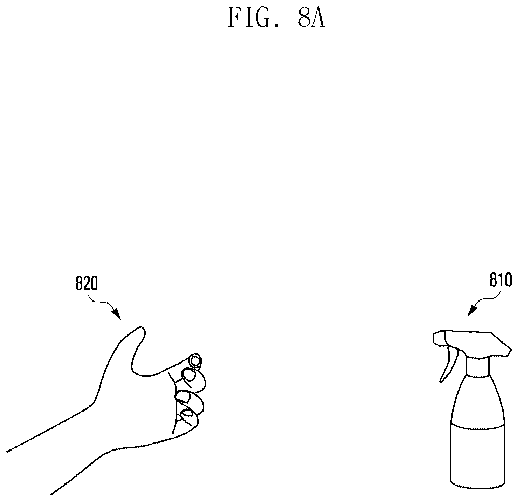

FIG. 8A illustrates a user's action and an object stored in a database of an electronic device 200 according to an embodiment of the disclosure.

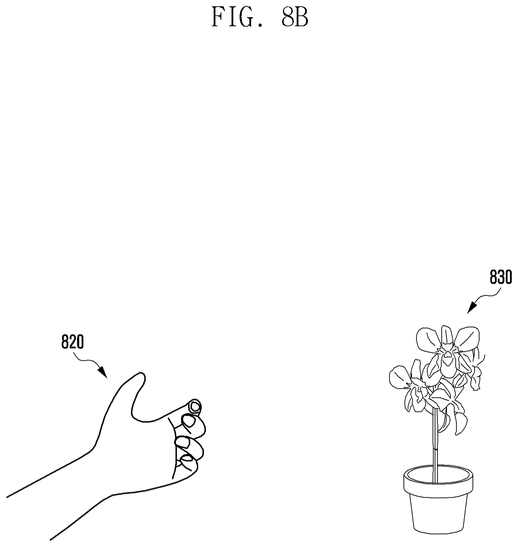

FIG. 8B illustrates a user's action and an object stored in a database of an electronic device 200 according to an embodiment of the disclosure.

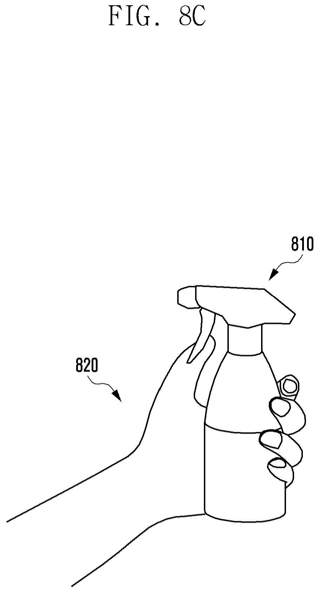

FIG. 8C illustrates an operation of recognizing an object in the real world and an action by an electronic device 200 according to an embodiment of the disclosure.

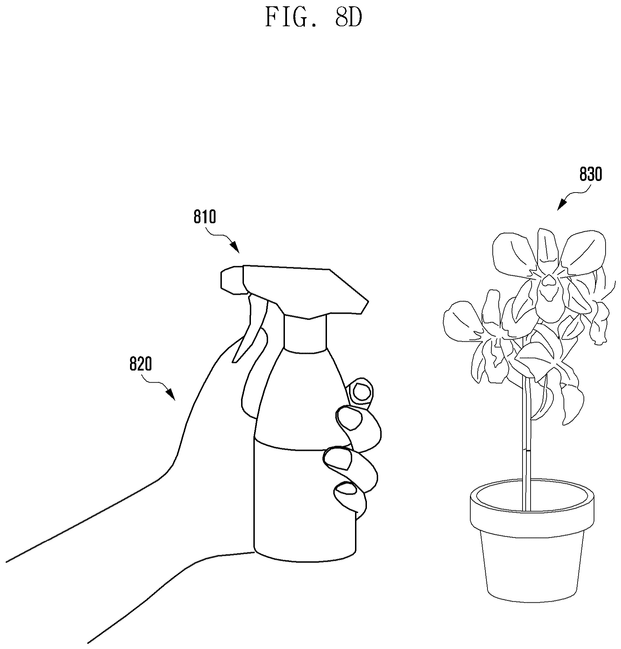

FIG. 8D illustrates an operation of recognizing multiple objects in the real world and an action by an electronic device 200 according to an embodiment of the disclosure.

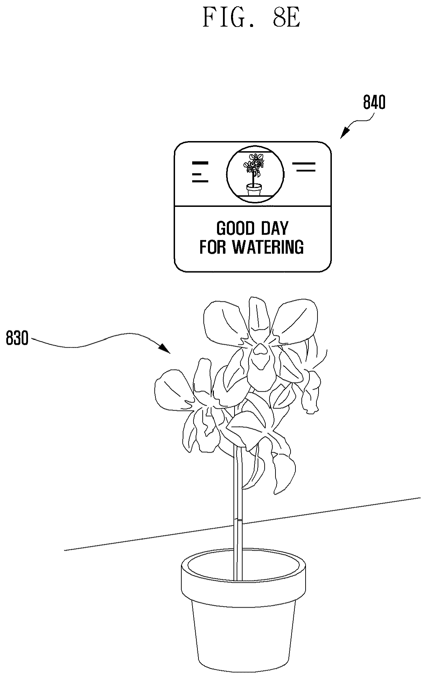

FIG. 8E illustrates an operation of displaying, based on an identified object and user's action, an execution screen of an application by an electronic device 200 according to an embodiment of the disclosure.

Referring to FIG. 8A, the electronic device 200 may store a spray 810 in a database of an object, and an action 820 of holding an object in a database of a user's action.

Referring to FIG. 8B, the electronic device 200 may store a pot 830 in a database of an object, and store an action 820 of stretching a hand toward an object in a database of a user's action.

In FIGS. 8A and 8B, the action 820 of stretching a hand toward an object and the action 820 of holding an object may be identical or similar to each other.

Referring to FIGS. 8A and 8C, when data corresponding to an identified first object (e.g., a spray) 810 and a user's action (e.g., holding an object) 820 in the database of the object and/or the database of the user's action, the electronic device 200 may identify, under the control of the processor 110, a service 840 corresponding to the identified object (e.g., the spray) 810 and user's action (e.g., holding an object) 820.

Referring to FIGS. 8A and 8C, when data corresponding to an identified first object (e.g., a spray) 810 and a user's action (e.g., holding an object) 820 in the database of the object and/or the database of the user's action, the electronic device 200 may identify, under the control of the processor 110, an application (e.g., a plant management application) 840 corresponding to the identified object (e.g., the spray) 810 and user's action (e.g., holding an object) 820.

Referring to FIGS. 8A, 8C, and 8E, the instructions stored in the memory 120 may cause, when executed individually or collectively by the at least one processor 110, the electronic device 200 to bind the identified service 840 with an identified second object (e.g., a pot) 830 and display the identified service 840 near the identified second object (e.g., the pot) 830 or on the identified second object (e.g., the pot) 830 in the user's field of view on the display (e.g., the display 260 of FIG. 2).

Referring to FIGS. 8A, 8C, and 8E, the instructions stored in the memory 120 may cause, when executed individually or collectively by the at least one processor 110, the electronic device 200 to bind an execution screen 840 of the identified application with the identified second object (e.g., the pot) 830 and display an execution screen 840 of the identified application near the identified second object (e.g., the pot) 830 or on the identified second object (e.g., the pot) 830 in the user's field of view on the display (e.g., the display 260 of FIG. 2).

For example, the identified service 840 may include an application execution screen for pot management or plant management.

Referring to FIGS. 8B and 8D, when data corresponding to the identified first object (e.g., the spray) 810, the second object (e.g., the pot) 830, and the user's action (e.g., stretching a hand toward an object) 840 is in the database of the object and/or the database of the user's action, the electronic device 200 may identify, under the control of the processor 110, a service 830 corresponding to the first object (e.g., the spray) 810, the second object (e.g., the pot) 830, and the user's action (e.g., stretching a hand toward an object) 820.

Referring to FIGS. 8B and 8D, when data corresponding to the identified first object (e.g., the spray) 810, the second object (e.g., the pot) 830, and the user's action (e.g., stretching a hand toward an object) 820 in the database of the object and/or the database of the user's action, the electronic device 200 may identify, under the control of the processor 110, an application 830 corresponding to the first object (e.g., the spray) 810, the second object (e.g., the pot) 830, and the user's action (e.g., stretching a hand toward an object) 820.

Referring to FIGS. 8B, 8D, and 8E, the instructions stored in the memory 120 may cause, when executed individually or collectively by the at least one processor 110, the electronic device 200 to bind the identified service 840 with the identified second object (e.g., the pot) 830 and display the identified service 840 near the identified second object (e.g., the pot) 830 or on the identified second object (e.g., the pot) 830 in the user's field of view on the display (e.g., the display 260 of FIG. 2).

Referring to FIGS. 8A, 8C, and 8E, the instructions stored in the memory 120 may cause, when executed individually or collectively by the at least one processor, the electronic device 200 to bind the execution screen 840 of the identified application with the identified second object (e.g., the pot) 830 and display the execution screen 840 of the identified application near the identified second object (e.g., the pot) 830 or on the identified second object (e.g., the pot) 830 on the display (e.g., the display 260 of FIG. 2).

For example, the identified service 840 may include an application execution screen for pot management or plant management.

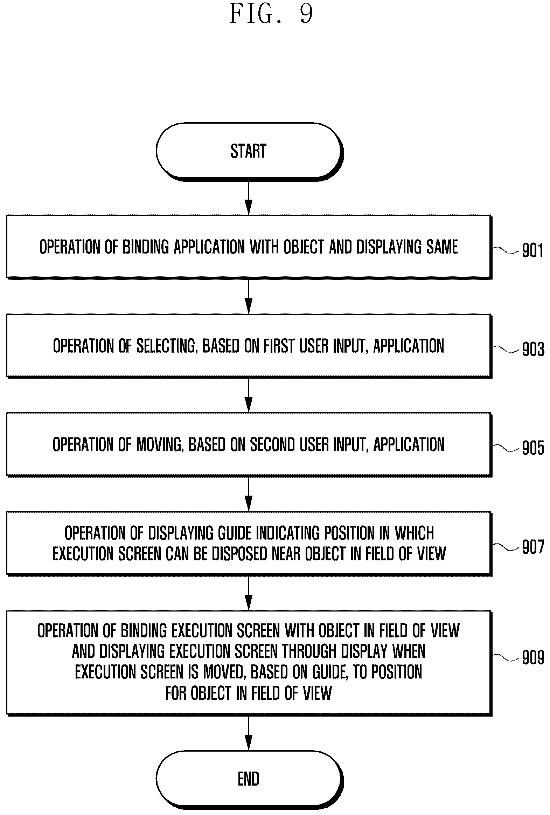

FIG. 9 is a flowchart illustrating an operation of changing a display area of an application bound with an object by an electronic device 200 according to an embodiment of the disclosure.

In an embodiment, in operation 901, instructions stored in a memory 120 may cause, when executed individually or collectively by at least one processor 110, the electronic device 200 to bind an application with at least one object and display the same through a display (e.g., the display 260 of FIG. 2).

In an embodiment, in operation 901, the instructions stored in the memory 120 may cause, when executed individually or collectively by the at least one processor 110, the electronic device 200 to bind an execution screen of an application with at least one object and display the same through a display (e.g., the display 260 of FIG. 2).

In an embodiment, in operation 901, the instructions stored in the memory 120 may cause, when executed individually or collectively by the at least one processor 110, the electronic device 200 to bind a service with at least one object and display the same through a display (e.g., the display 260 of FIG. 2).

In an embodiment, in operation 903, the instructions stored in the memory 120 may cause, when executed individually or collectively by the at least one processor 110, the electronic device 200 to select, based on a first user input, an application.

In an embodiment, in operation 903, the instructions stored in the memory 120 may cause, when executed individually or collectively by the at least one processor 110, the electronic device 200 to select, based on a first user input, an application execution screen.

In an embodiment, in operation 903, the instructions stored in the memory 120 may cause, when executed individually or collectively by the at least one processor 110, the electronic device 200 to select, based on a first user input, a service.

For example, the first user input of FIG. 9 may include a user action of holding a service being displayed through the display (e.g., the display 260 of FIG. 2). The electronic device 200 may acquire a first user input in the real world through at least one camera (e.g., an RGB camera or a depth camera) under the control of the processor 110. The electronic device 200 may determine, based on a computer program for action recognition, whether the acquired first user input is a user's action of holding a service bound with an object and displayed, under the control of the processor 110.

In an embodiment, in operation 905, the instructions stored in the memory 120 may cause, when executed individually or collectively by the at least one processor 110, the electronic device 200 to move, based on a second user input, the application.

In an embodiment, in operation 905, the instructions stored in the memory 120 may cause, when executed individually or collectively by the at least one processor 110, the electronic device 200 to move the application according to the second user input and display the same through a display (e.g., the display 260 of FIG. 2).

In an embodiment, in operation 905, the instructions stored in the memory 120 may cause, when executed individually or collectively by the at least one processor 110, the electronic device 200 to move, based on the second user input, an execution screen of the application.

In an embodiment, in operation 905, the instructions stored in the memory 120 may cause, when executed individually or collectively by the at least one processor 110, the electronic device 200 to move an execution screen of an application according to the second user input and display the same through the display (e.g., the display 260 of FIG. 2).

In an embodiment, in operation 905, the instructions stored in the memory 120 may cause, when executed individually or collectively by the at least one processor 110, the electronic device 200 to move a service based on the second user input.

In an embodiment, in operation 905, the instructions stored in the memory 120 may cause, when executed individually or collectively by the at least one processor 110, the electronic device 200 to move a service according to the second user input and display the same through the display (e.g., the display 260 of FIG. 2).

For example, the second user input of FIG. 9 may include a user input of holding an application being displayed through the display (e.g., the display 260 of FIG. 2). The second user input may include an input consecutive to the first user input. The electronic device 200 may acquire the second user input in the real world through at least one camera (e.g., an RGB camera or a depth camera) under the control of the processor 110. The electronic device 200 may determine, based on a computer program for action recognition, whether the acquired second user input is a user's action of holding and moving a service bound with the object and displayed, under the control of the processor 110.

For example, the second user input of FIG. 9 may include a user action of holding and moving an execution screen of an application being displayed through the display (e.g., the display 260 of FIG. 2).

For example, the second user input of FIG. 9 may include a user action of holding and moving a service being displayed through the display (e.g., the display 260 of FIG. 2).

In an embodiment, when the service is moved according to the second user input, in operation 907, the instructions stored in the memory 120 may cause, when executed individually or collectively by the at least one processor 110, the electronic device 200 to display a guide indicating the position at which the application can be disposed near the object in the field of view.

In an embodiment, when the service is moved according to the second user input, in operation 907, the instructions stored in the memory 120 may cause, when executed individually or collectively by the at least one processor 110, the electronic device 200 to display a guide indicating the position at which an execution screen of the application can be disposed near the object in the field of view.

In an embodiment, when the service is moved according to the second user input, in operation 907, the instructions stored in the memory 120 may cause, when executed individually or collectively by the at least one processor 110, the electronic device 200 to display a guide indicating the position at which the service can be disposed near the object in the field of view.

In an embodiment, the position or the area in which the application, the execution screen of the application, or the service can be disposed around the object in the field of view may include a surface of the object and/or an area spaced apart from the object by a predetermined distance.

In an embodiment, in operation 909, the instructions stored in the memory 120 may cause, when executed individually or collectively by the at least one processor 110, the electronic device 200 to bind the object with the application in the field of view and display the application through the display (e.g., the display 260 of FIG. 2) when the application is moved, based on the guide, to the position of the object in the field of view.

In an embodiment, in operation 909, the instructions stored in the memory 120 may cause, when executed individually or collectively by the at least one processor 110, the electronic device 200 to bind the execution screen of the application with the object in the field of view and display the execution screen of the application through the display (e.g., the display 260 of FIG. 2) when the execution screen of the application is moved, based on the guide, to the position of the object in the field of view.

In an embodiment, in operation 909, the instructions stored in the memory 120 may cause, when executed individually or collectively by the at least one processor 110, the electronic device 200 to bind the service with the object in the field of view and display the service on the display (e.g., the display 260 of FIG. 2) when the service is moved, based on the guide, to the position of the object in the field of view.

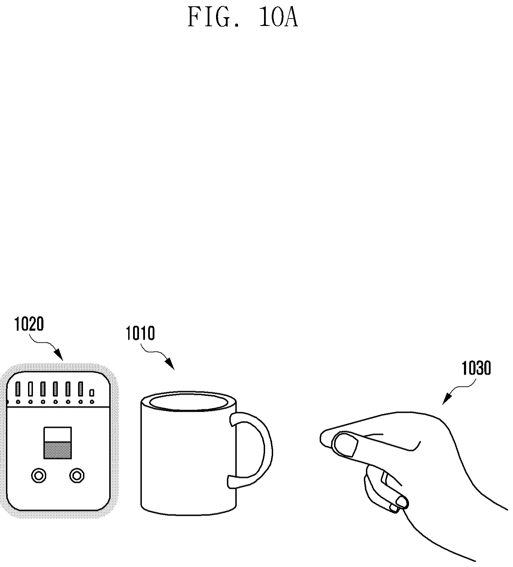

FIG. 10A illustrates an operation of selecting an execution screen 1020 of an application bound with an object 1010 according to an embodiment of the disclosure.

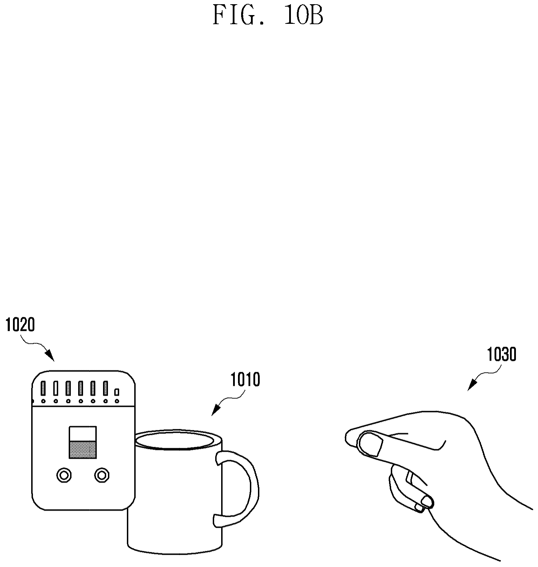

FIG. 10B illustrates an operation of moving an execution screen 1020 of an application according to an embodiment of the disclosure.

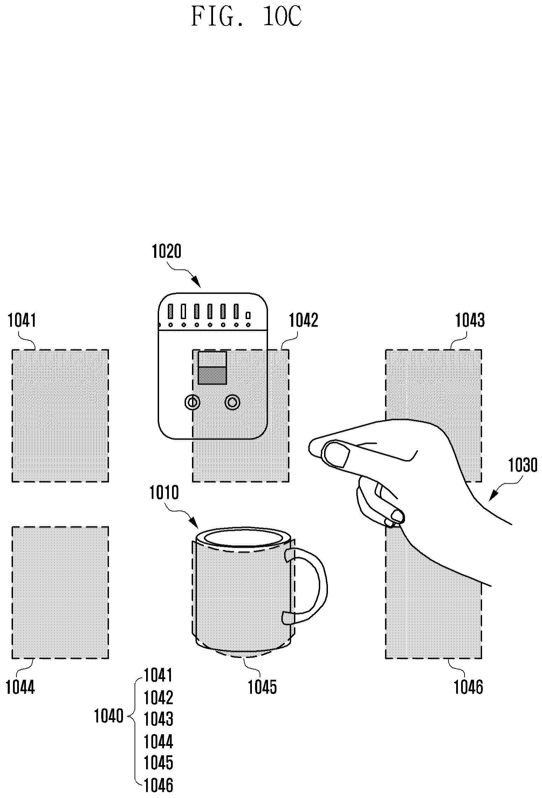

FIG. 10C illustrates an operation of displaying a guide by an electronic device 200 according to an embodiment of the disclosure.

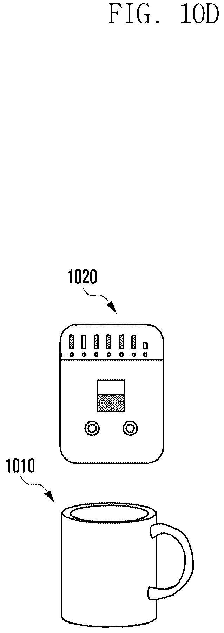

FIG. 10D illustrates an operation of displaying an execution screen 1020 of an application bound with an object 1010 when the execution screen 1020 of the application moves to the position corresponding to a guide according to an embodiment of the disclosure.

Referring to FIGS. 10A and 10B, the electronic device 200 may select, based on a user input 1030, an application 1020 bound with an object (e.g., cup) 1010 and displayed through a display (e.g., the display 260 of FIG. 2) in a user's field of view.

Referring to FIGS. 10A and 10B, the electronic device 200 may select, based on the user input 1030, an execution screen 1020 of an application bound with the object (e.g., cup) 1010 and displayed through the display (e.g., the display 260 of FIG. 2) in the user's field of view.

Referring to FIGS. 10A and 10B, the electronic device 200 may select, based on the user input 1030, a service 1020 bound with the object (e.g., cup) 1010 and displayed through the display (e.g., the display 260 of FIG. 2) in the user's field of view.

In an embodiment, the electronic device 200 may move, based on the user input 1030, the application 1020, the execution screen 1020 of the application, or the service 1020.

The user input 1030 of FIGS. 10A and 10B may be divided into an action of holding and an action of holding and moving, but two actions may be included in a single continuous input.

For example, the user input 1030 may include an action of holding the service 1020 being displayed through the display (e.g., the display 260 of FIG. 2) or an action of moving the application 1020.

For example, the user input 1030 may include an action of holding the service 1020 being displayed through the display (e.g., the display 260 of FIG. 2) or an action of moving the execution screen 1020 of the application.

For example, the user input 1030 may include an action of holding the service 1020 being displayed through the display (e.g., the display 260 of FIG. 2) or an action of moving the service 1020.

In an embodiment, the electronic device 200 may acquire the user input 1030 in the real world through at least one camera (e.g., an RGB camera or a depth camera) under the control of the processor 110. The electronic device 200 may determine, based on a computer program for action recognition, whether the acquired user input 1030 is a user's action of holding the application 1020 bound with the object and displayed or whether the user input 1030 is an action of moving the application 1020, under the control of the processor 110.

In an embodiment, the electronic device 200 may acquire the user input 1030 in the real world through at least one camera (e.g., the RGB camera or the depth camera) under the control of the processor 110. The electronic device 200 may determine, based on the computer program for action recognition, whether the acquired user input 1030 is the user's action of holding the execution screen 1020 of the application bound with the article and displayed or whether the user input 1020 is an action of moving the execution screen 1020 of the application, under the control of the processor 110.

In an embodiment, the electronic device 200 may acquire the user input 1030 in the real world through the at least one camera (e.g., the RGB camera or the depth camera) under the control of the processor 110. The electronic device 200 may determine, based on the computer program for action recognition, whether the acquired user input 1030 is the user's action of holding the service 1020 bound with the object and displayed or whether the user input 1030 is an action of moving the service 1020, under the control of the processor 110.

In an embodiment, the electronic device 200 may display the application 1020 moving according to the user input 1030 through the display (e.g., the display 260 of FIG. 2) under the control of the processor 110.

In an embodiment, the electronic device 200 may display the execution screen 1020 of the application, which moves according to the user input 1030, through the display (e.g., the display 260 of FIG. 2) under the control of the processor 110.

In an embodiment, the electronic device 200 may display the service 1020 moving according to the user input 1030 through the display (e.g., the display 260 of FIG. 2) under the control of the processor 110.

Referring to FIG. 10C, when the application 1020 is moved according to the user input 1030, the electronic device 200 may display, around the object (e.g., cup) 1010 through the display (e.g., the display 260 of FIG. 2), at least one guide 1040 indicating the position or area in which the application can be placed.

Referring to FIG. 10C, when the execution screen 1020 of the application is moved according to the user input 1030, the electronic device 200 may display, around the object (e.g., cup) 1010 through the display (e.g., the display 260 of FIG. 2), at least one guide 1040 indicating the position or area in which the execution screen of the application can be placed.

Referring to FIG. 10C, when the application 1020, the execution screen 1020 of the application, or the service 1020 is moved according to the user input 1030, the electronic device 200 may display, around the object (e.g., cup) 1010 through the display (e.g., the display 260 of FIG. 2), at least one guide 1040 indicating the position or area in which the application, the execution screen of the application, or the service can be placed.

For example, the at least one guide 1040 may indicate an area in which the application 1020, the execution screen 1020 of the application, or the service 1020 is placed around the object (e.g., cup) 1010 and on the surface of the object (e.g., cup) 1010 and bound with the object (e.g., cup) 1010 to be displayed in the field of view. The at least one guide 1040 of FIG. 10C may include a first guide 1041, a second guide 1042, a third guide 1043, a fourth guide 1044, a fifth guide 1045, and a sixth guide 1046. The fifth guide 1045 may include an area corresponding to the surface of the object (e.g., cup) 1010. The first guide 1041, the second guide 1042, the third guide 1043, the fourth guide 1044, and the sixth guide 1046 may include an area corresponding to the vicinity of the object (e.g., cup) 1010.

Referring to FIG. 10D, when the application 1020, the execution screen 1020 of the application, or the service 1020 moved according to the user input 1030 is moved to the position corresponding to the at least one guide 1042, the electronic device 200 may bind the application 1020, the execution screen 1020 of the application, or the service 1020 with the object (e.g., cup) 1010 in the field of view at the corresponding position (e.g., the position corresponding to the at least one guide 1042), and display the application 1020, the execution screen 1020 of the application, or the service 1020 through the display (e.g., the display 260 of FIG. 2).

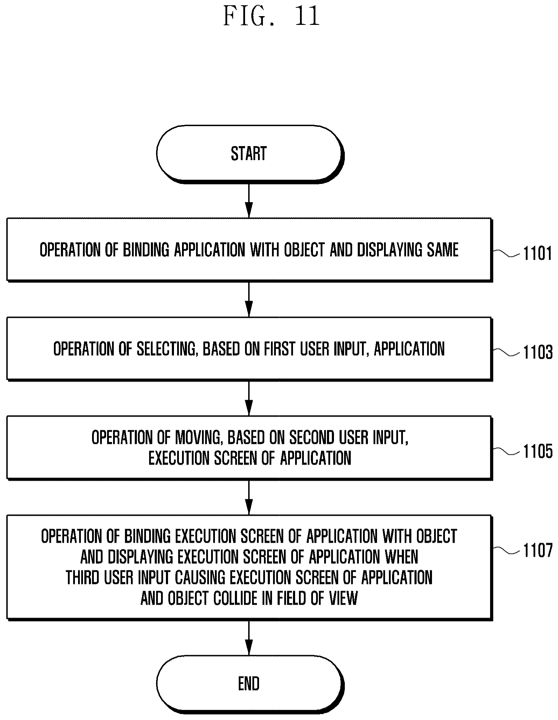

FIG. 11 is a flowchart illustrating an operation of changing a display area of a service bound with an object by an electronic device 200 according to an embodiment of the disclosure.

In an embodiment, in operation 1101, instructions stored in the memory 120 may cause, when executed individually or collectively by at least one processor 110, the electronic device 200 to bind an application with at least one object and display the same through a display (e.g., the display 260 of FIG. 2).

In an embodiment, in operation 1101, the instructions stored in the memory 120 may cause, when executed individually or collectively by the at least one processor 110, the electronic device 200 to an execution screen of the application with the at least one object and display the same through the display (e.g., the display 260 of FIG. 2).

In an embodiment, in operation 1101, the instructions stored in the memory 120 may cause, when executed individually or collectively by the at least one processor 110, the electronic device 200 to bind a service with the at least one object and display the same through the display (e.g., the display 260 of FIG. 2).

However, the disclosure may not limited thereto. In an embodiment, in operation 1101, the instructions stored in the memory 120 may cause, when executed individually or collectively by the at least one processor 110, the electronic device 200 to display the application, the execution screen of the application, or the service through the display (e.g., the display 260 of FIG. 2). The application, the execution screen of the application, or the service that is being displayed through the display (e.g., the display 260 of FIG. 2) may include an application, an execution screen of the application, or a service that is not bound with an object or is not related to the object.

In an embodiment, in operation 1103, the instructions stored in the memory 120 may cause, when executed individually or collectively by the at least one processor 110, the electronic device 200 to select, based on a first user input, the application.

In an embodiment, in operation 1103, the instructions stored in the memory 120 may cause, when executed individually or collectively by the at least one processor 110, the electronic device 200 to select, based on the first user input, the execution screen of the application.

In an embodiment, in operation 1103, the instructions stored in the memory 120 may cause, when executed individually or collectively by the at least one processor 110, the electronic device 200 to select, based on the first user input, the service.

For example, the first user input of FIG. 11 may include a user action of holding the application, the execution screen of the application, or the service displayed through the display (e.g., the display 260 of FIG. 2). The electronic device 200 may acquire the first user input in the real world through at least one camera (e.g., an RGB camera or a depth camera) under the control of the processor 110. The electronic device 200 may determine, based on a computer program for action recognition, whether the acquired first user input is a user's action of holding the application, the execution screen of the application, or the service that is being displayed.

In an embodiment, in operation 1105, the instructions stored in the memory 120 may cause, when executed individually or collectively by the at least one processor 110, the electronic device 200 to move, based on a second input, the application.

In an embodiment, in operation 1105, the instructions stored in the memory 120 may cause, when executed individually or collectively by the at least one processor 110, the electronic device 200 to move, based on the second user input, the execution screen of the application.

In an embodiment, in operation 1105, the instructions stored in the memory 120 may cause, when executed individually or collectively by the at least one processor 110, the electronic device 200 to move, based the second user input, the service.

For example, the second user input of FIG. 11 may include a user's action of holding or moving the application, the execution screen of the application, or the service that is being displayed through the display (e.g., the display 260 of FIG. 2).

In an embodiment, the electronic device 200 may acquire the second user input in the real world through at least one camera (e.g., an RGB camera or a depth camera) under the control of the processor 110. The electronic device 200 may determine, based on a computer program for action recognition, whether the acquired second user input is a user's action of holding or moving the application, the execution screen of the application, or the service that is being displayed, under the control of the processor 110.

In an embodiment, the second user input may include an operation consecutive to the first user input. Operation 1105 may be omitted.

In an embodiment, in operation 1107, the instructions stored in the memory 120 may cause, when executed individually or collectively by the at least one processor 110, the electronic device 200 to bind the execution screen of the application with the object and display the execution screen of the application when a third user input causing the object and the execution screen to collide in the field of view. The execution screen of the application may be displayed on the surface of or around the object in the field of view.

In an embodiment, in operation 1107, the instructions stored in the memory 120 may cause, when executed individually or collectively by the at least one processor 110, the electronic device 200 to bind the application with the object and display the execution screen of the application when a third user input causing the object and the application to collide in the file of view. The application may be displayed on the surface of or around the object in the field of view.

In an embodiment, in operation 1107, the instructions stored in the memory 120 may cause, when executed individually or collectively by the at least one processor 110, the electronic device 200 to bind the service with the object and display the service when a third user input causing the object and the service to collide in the field of view. The service may be displayed on the surface of or around the object in the field of view.

In an embodiment, in operation 1107, the instructions stored in the memory 120 may cause, when executed individually or collectively by the at least one processor 110, the electronic device 200 to identify the speed of the third user input.

In an embodiment, in operation 1107, the instructions stored in the memory 120 may cause, when executed individually or collectively by the at least one processor 110, the electronic device 200 to control, based on the speed of the third user input, the speed of moving and displaying the service.

For example, the third user input of FIG. 11 may include a user's action of throwing the application, the execution screen of the application, or the service toward the object and/or a user's action of dragging the service (or the application or the execution screen of the application) toward the object and causing the service and the object to collide.

In an embodiment, the second user input and the third input may include an input consecutive to the first user input. The electronic device 200 may acquire a third user input in the real world through at least one camera (e.g., an RGB camera or a depth camera) under the control of the processor 110. The electronic device 200 may determine, based on a computer program for action recognition, whether the acquired third user input is the user's action of causing the application, the execution screen of the application, or the service and the object to collide or throwing the application, the execution screen of the application, or the service, under the control of the processor 110.

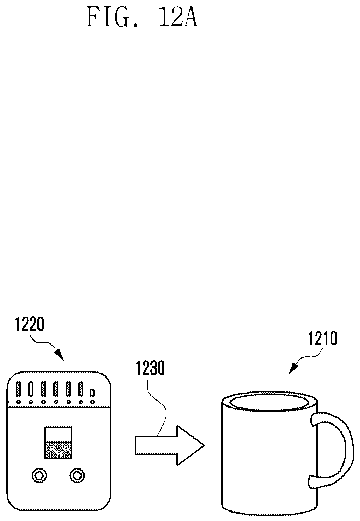

FIG. 12A illustrates a user action 1230 of causing an execution screen 1220 of an application selected according to a user input and an object 1210 to collide according to an embodiment of the disclosure.

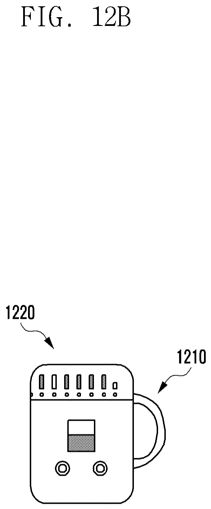

FIG. 12B illustrates an operation of displaying, based on a user action 1230 of colliding with an object 1210, an execution screen 1220 of an application bound to the surface of the object 1210 according to an embodiment of the disclosure.

Referring to FIGS. 12A and 12B, the electronic device 200 may select, based on a user input, the execution screen 1220 of the application, displayed through a display (e.g., the display 260 of FIG. 2).

In an embodiment, the electronic device 200 may move, based on the user action 1230 causing the service 1220 and the object 1210 to collide, the application 1220, the execution 1220 of the application, or the service 1220.

In an embodiment, the electronic device 200 may display, based on the user action 1230 causing the service 1220 and the object 1210 to collide, the application 1220, the execution screen 1220 of the application, or the service 1220 bound to the surface of the object 1210 through the display (e.g., the display 260 of FIG. 2).

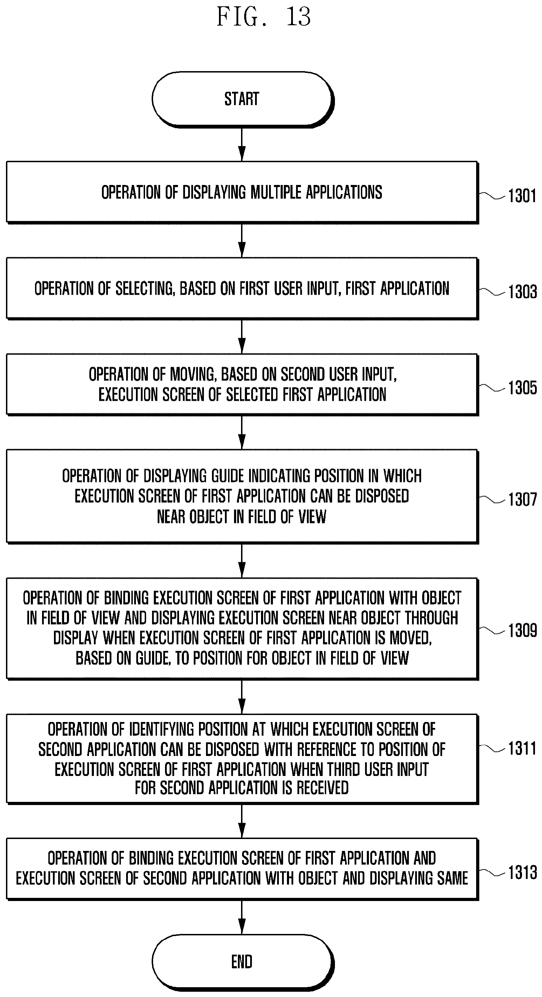

FIG. 13 is a flowchart illustrating an operation of binding multiple applications with an object and displaying the same by an electronic device 200 according to an embodiment of the disclosure.

In an embodiment, in operation 1301, instructions stored in a memory 120 may cause, when executed individually or collectively by at least one processor 110, the electronic device 200 to display multiple applications through a display (e.g., the display 260 of FIG. 2).

In an embodiment, in operation 1301, the instructions stored in the memory 120 may cause, when executed individually or collectively by the at least one processor 110, the electronic device 200 to display execution screens of the multiple applications through the display (e.g., the display 260 of FIG. 2).

In an embodiment, in operation 1301, the instructions stored in the memory 120 may cause, when executed individually or collectively by the at least one processor 110, the electronic device 200 to display multiple services through the display (e.g., the display 260 of FIG. 2).

In an embodiment, in operation 1303, the instructions stored in the memory 120 may cause, when executed individually or collectively by the at least one processor 110, the electronic device 200 to select, based on a first user input, a first application.

In an embodiment, in operation 1303, the instructions stored in the memory 120 may cause, when executed individually or collectively by the at least one processor 110, the electronic device 200 to select, based on the first user input, an execution screen of the first application.

In an embodiment, in operation 1303, the instructions stored in the memory 120 may cause, when executed individually or collectively by the at least one processor 110, the electronic device 200 to select, based on the first user input, a first service.

For example, the first user input of FIG. 13 may include a user action of holding the application, the execution screen of the application, or the service displayed through the display (e.g., the display 260 of FIG. 2).

In an embodiment, the electronic device 200 may acquire the first user input in the real world through at least one camera (e.g., an RGB camera or a depth camera) under the control of the processor 110. The electronic device 200 may determine, based on a computer program for action recognition, whether the acquired first user input is a user's action of holding the application, the execution screen of the application, or the service bound with the object and displayed, under the control of the processor 110.

In an embodiment, in operation 1305, the instructions stored in the memory 120 may cause, when executed individually or collectively by the at least one processor 110, the electronic device 200 to move, based on a second user input, a first application.

In an embodiment, in operation 1305, the instructions stored in the memory 120 may cause, when executed individually or collectively by the at least one processor 110, the electronic device 200 to move, based on the second user input, an execution screen of the application.

In an embodiment, in operation 1305, the instructions stored in the memory 120 may cause, when executed individually or collectively by the at least one processor 110, the electronic device 200 to move, based on the second user input, a first service.

In an embodiment, in operation 1305, the instructions stored in the memory 120 may cause, when executed individually or collectively by the at least one processor 110, the electronic device 200 to move the first application according to the second user input to display the same through the display (e.g., the display 260 of FIG. 2).

For example, the second user input of FIG. 13 may include a user action of holding and moving the application, the execution screen of the application, or the service displayed through the display (e.g., the display 260 of FIG. 2). The second user input may include an input consecutive to the first user input. The electronic device 200 may acquire the second user input in the real world through at least one camera (e.g., an RGB camera or a depth camera) under the control of the processor 110. The electronic device 200 may determine, based on a computer program for action recognition, whether the acquired second user input is a user's action of holding and moving the application, the execution screen of the application, or the service bound to the object and displayed, under the control of the processor 110.

For example, the second user input may include an input consecutive to the first user input.

In an embodiment, when the first application is moved according to the second user input, in operation 1307, the instructions stored in the memory 120 may cause, when executed individually or collectively by the at least one processor 110, the electronic device 200 to display, through the display (e.g., the display 260 of FIG. 2), a guide indicating the position at which the first application can be disposed near the object in the field of view.

In an embodiment, when the execution screen of the first application is moved according to the second user input, in operation 1307, the instructions stored in the memory 120 may cause, when executed individually or collectively by the at least one processor 110, the electronic device 200 to display, through the display (e.g., the display 260 of FIG. 2), a guide indicating the position at which the execution screen of the first application can be disposed near the object in the field of view. In an embodiment, when the first service is moved according to the second user input, the instructions stored in the memory 120 may cause, when executed individually or collectively by the at least one processor 110, the electronic device 200 to display, through the display (e.g., the display 260 of FIG. 2), a guide indicating the position at which the first service is disposed near the object in the field of view.

In an embodiment, the position or area in which the application, the execution screen of the application, or the service can be placed around the object in the field of view may include a surface of the object and/or an area spaced apart from the object by a predetermined distance.

In an embodiment, in operation 1309, the instructions stored in the memory 120 may cause, when executed individually or collectively by the at least one processor 110, the electronic device 200 to bind the first application with the object in the field of view and display the first application near the object through the display (e.g., the display 260 of FIG. 2) when the first application is moved, based on the guide, to the position for the object in the field of view.

In an embodiment, in operation 1309, the instructions stored in the memory 120 may cause, when executed individually or collectively by the at least one processor 110, the electronic device 200 to bind the execution screen of the first application with the object in the field of view and display the execution screen of the first application near the object through the display (e.g., the display 260 of FIG. 2) when the execution screen of the first application is moved, based on the guide, to the position for the object in the field of view.

In an embodiment, in operation 1309, the instructions stored in the memory 120 may cause, when executed individually or collectively by the at least one processor 110, the electronic device 200 to bind the service with the object and display the first service near the object through the display (e.g., the display 260 of FIG. 2) when the service is moved, based on the guide, to the position for the object in the field of view.

In an embodiment, in operation 1311, the instructions stored in the memory 120 may cause, when executed individually or collectively by the at least one processor 110, the electronic device 200 to identify the position of the object, in which a second application can be disposed, with reference to the position of the first application when a third user input to the second application is received.

In an embodiment, in operation 1311, the instructions stored in the memory 120 may cause, when executed individually or collectively by the at least one processor 110, the electronic device 200 to identify the position of the object, in which an execution screen of the second application can be disposed, with reference to the position of the execution screen of the first application when a third user input to the execution screen of the second application is received.

In an embodiment, in operation 1311, the instructions stored in the memory 120 may cause, when executed individually or collectively by the at least one processor 110, the electronic device 200 to identify the position of the object, in which a second service can be disposed, with reference to the position of the first service when a third user input to a second service is received.

In an embodiment, in operation 1313, the instructions stored in the memory 120 may cause, when executed individually or collectively by the at least one processor 110, the electronic device 200 to bind the first application and the second application with at least one object and display the same through the display (e.g., the display 260 of FIG. 2).

In an embodiment, in operation 1313, the instructions stored in the memory 120 may cause, when executed individually or collectively by the at least one processor 110, the electronic device 200 to bind the execution screen of the first application and the execution screen of the second application with at least one object and display the same through the display (e.g., the display 260 of FIG. 2).

In an embodiment, in operation 1313, the instructions stored in the memory 120 may cause, when executed individually or collectively by the at least one processor 110, the electronic device 200 to bind the first service and the second service with at least one object and display the same through the display (e.g., the display 260 of FIG. 2).

For example, the third user input of FIG. 13 may include a user's action of throwing the application, the execution screen of the application, or the service toward the object and/or a user's action of dragging the service (or the application or the execution screen of the application) to the object and causing the service and the object to collide.

In an embodiment, the third user input of FIG. 13 may be separated from the first user input or the second user input. The electronic device 200 may acquire the third user input in the real world through at least one camera (e.g., an RGB camera or a depth camera) under the control of the processor 110. The electronic device 200 may determine, based on a computer program for action recognition, whether the acquired third user input is a user's action of causing the application, the execution screen of the application, or the service and the object to collide or throwing the application, the execution screen of the application, or the service toward the object, under the control of the processor 110.

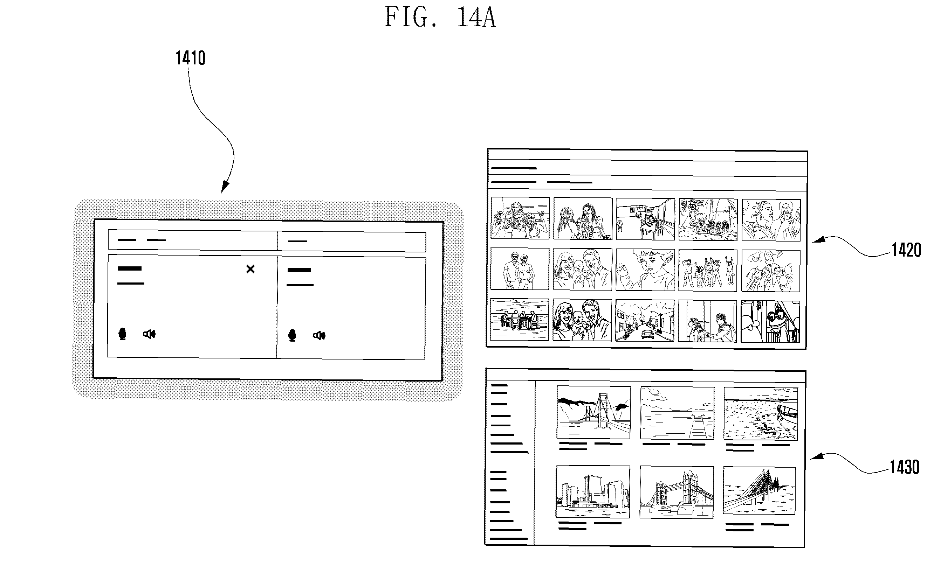

FIG. 14A illustrates multiple applications being displayed by an electronic device 200 according to an embodiment of the disclosure.

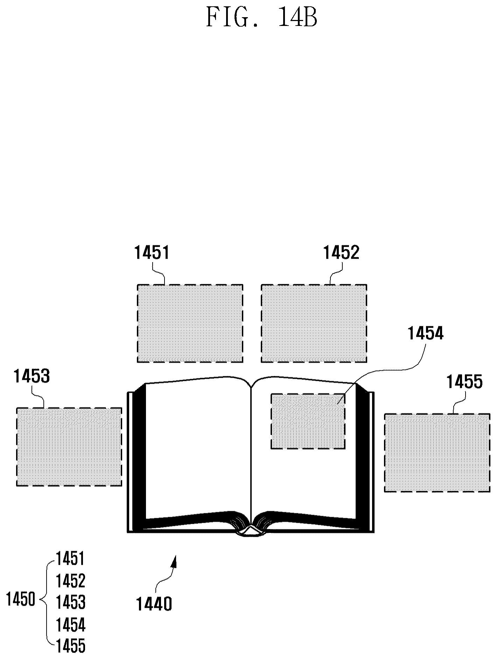

FIG. 14B illustrates at least one guide 1450 displayed through a display (e.g., the display 260 of FIG. 2) when a first application 1410 selected by an electronic device 200 is moved to an object 1440 according to an embodiment of the disclosure.

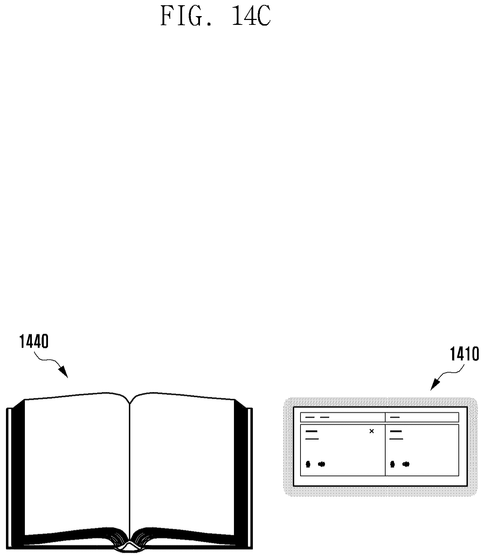

FIG. 14C illustrates an operation in which a first application 1410 selected by an electronic device 200 is bound with an object 1440 and displayed according to an embodiment of the disclosure.

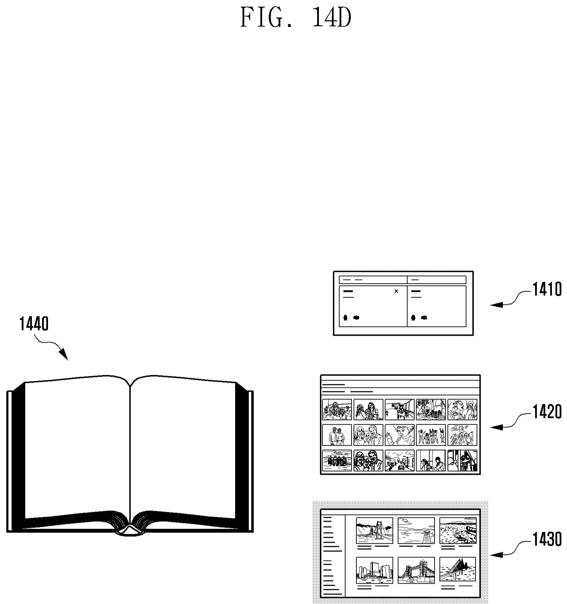

FIG. 14D illustrates an operation in which multiple applications 1410, 1420, and 1430 are bound with an object 1440 and displayed in an electronic device 200 according to an embodiment of the disclosure.

Referring to FIG. 14A, the electronic device 200 may display multiple services through a display (e.g., the display 260 of FIG. 2).

Referring to FIG. 14B, when a selected first service 1410 is moved to an object (e.g., book) 1440, the electronic device 200 may display, through the display (e.g., the display 260 of FIG. 2), at least one guide indicating the position or area in which the first service can be placed.

For example, the at least one guide 1450 of FIG. 14B may include a first guide 1451, a second guide 1452, a third guide 1453, a fourth guide 1454, and a fifth guide 1455. The fourth guide 1454 may include an area corresponding to a surface of the object (e.g., book) 1440. The first guide 1451, the second guide 1452, the third guide 1453, and the fifth guide 1455 may include an area corresponding to the vicinity of the object (e.g., book) 1440.

Referring to FIG. 14C, when the first service 1410 is moved to the position corresponding to at least one guide (e.g., the fifth guide 1455), the electronic device 200 may bind a first application 1410 with the object (e.g., book) 1440 at the corresponding position and display the same through the display (e.g., the display 260 of FIG. 2).

Referring to FIG. 14C, when the first service 1410 is moved to the position corresponding to at least one guide (e.g., the fifth guide 1455), the electronic device 200 may bind an execution screen 1410 of the first application with the object (e.g., book) 1440 at the corresponding position and display the same through the display (e.g., the display 260 of FIG. 2).

Referring to FIG. 14C, when the first service 1410 is moved to the position corresponding to at least one guide (e.g., the fifth guide 1455), the electronic device 200 may bind the first service 1410 with the object (e.g., book) 1440 at the corresponding position and display the same through the display (e.g., the display 260 of FIG. 2).

Referring to FIG. 14D, when receiving a third user input to a second application 1420, the electronic device 200 may identify the position at which the second application 1420 can be placed with reference to the position or area of the first application 1410 bound with the object (e.g., book) 1440 and displayed. When receiving a fourth user input to a third application 1430, the electronic device 200 may identify the position at which the third application 1430 can be placed with reference to the position or area of the first application 1410 bound with the object (e.g., book) 1440 and displayed.

Referring to FIG. 14D, when receiving a third user input to an execution screen 1420 of the second application, the electronic device 200 may identify the position at which the execution screen 1420 of the second application can be placed with reference to the position or area of the execution screen 1410 of the first application, which is bound with the object (e.g., book) 1440 and displayed. When receiving a fourth user input to an execution screen 1430 of a third application, the electronic device 200 may identify the position at which the execution screen 1430 of the third application can be placed with reference to the position or area of the execution screen 1410 of the first application, which is bound with the object (e.g., book) 1440 and displayed.

Referring to FIG. 14D, when receiving a third user input to a second service 1420, the electronic device 200 may identify the position at which the second service 1420 can be placed with reference to the position or area of the first service 1410 bound with the object (e.g., book) 1440 and displayed. When receiving a fourth user input to a third service 1430, the electronic device 200 may identify the position at which the third service 1430 can be placed with reference to the position or area of the first service 1410 bound with the object (e.g., book) 1440 and displayed.

In an embodiment, the electronic device 200 may bind the first application 1410, the second application 1420, and third application 1430 with the object (e.g., book) 1440 and display the same through the display (e.g., the display 260 of FIG. 2).

In an embodiment, the electronic device 200 may bind the execution screen 1410 of the first application, the execution screen 1420 of the second application, and the execution screen 1430 of the third application with the object (e.g., book) 1440 and display the same through the display (e.g., the display 260 of FIG. 2).

In an embodiment, the electronic device 200 may bind the first service 1410, the second service 1420, and the third service 1430 with the object (e.g., book) 1440 and display the same through the display (e.g., the display 260 of FIG. 2).

The third user input and the fourth user input of FIG. 14D may include a user's action of throwing the application, the execution screen of the application, or the service toward the object and/or a user's action of dragging the service to the object and causing the service and the object to collide.

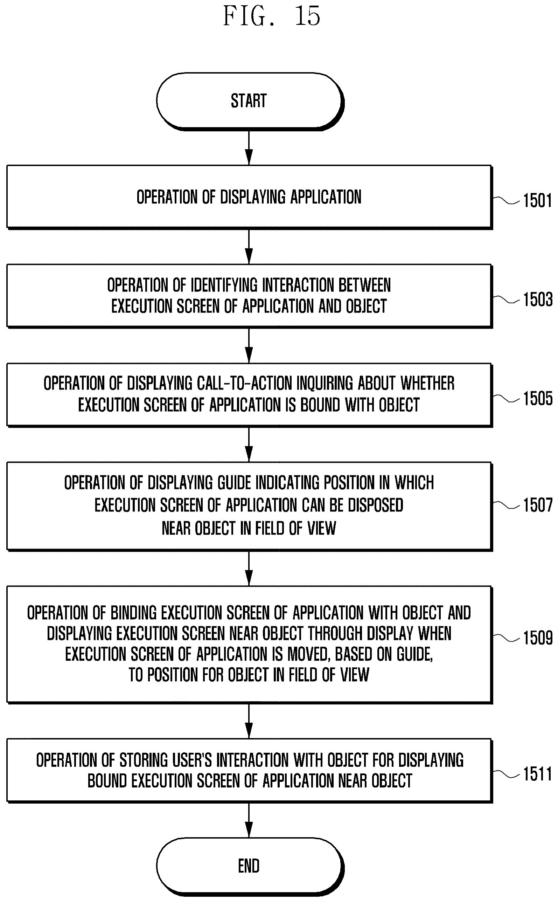

FIG. 15 is a flowchart illustrating an operation of mapping an application being displayed to an object and/or an action in an electronic device 200 according to an embodiment of the disclosure.

In an embodiment, in operation 1501, instructions stored in a memory 120 may cause, when executed individually or collectively by at least one processor 110, the electronic device 200 to display an application through a display (e.g., the display 260 of FIG. 2). The application being displayed through the display (e.g., the display 260 of FIG. 2) may include a service that is not bound with the object or is not related to the object.

In an embodiment, in operation 1501, the instructions stored in the memory 120 may cause, when executed individually or collectively by the at least one processor 110, the electronic device 200 to display an execution screen of the application through the display (e.g., the display 260 of FIG. 2). The execution screen of the application, which is being displayed through the display (e.g., the display 260 of FIG. 2), may include a service that is not bound with the object or is not related to the object.

In an embodiment, in operation 1501, the instructions stored in the memory 120 may cause, when executed individually or collectively by the at least one processor 110, the electronic device 200 to display the service through the display (e.g., the display 260 of FIG. 2). The service being displayed through the display (e.g., the display 260 of FIG. 2) may include a service that is not bound with the object or is not related to the object.

In an embodiment, in operation 1503, the instructions stored in the memory 120 may cause, when executed individually or collectively by the at least one processor 110, the electronic device 200 to identify a user's action for an interaction between the application and the object.

In an embodiment, in operation 1503, the instructions stored in the memory 120 may cause, when executed individually or collectively by the at least one processor 110, the electronic device 200 to identify a user's action for an interaction between the execution screen of the application and the object.

In an embodiment, in operation 1503, the instructions stored in the memory 120 may cause, when executed individually or collectively by the at least one processor 110, the electronic device 200 to identify a user's action for an interaction between the service and the object.

In an embodiment, the user's action for the interaction between the service (or the application or the execution screen of the application) and the object may include a user input causing at least one object and the service to collide.

For example, the user's action for the interaction between the service (or the application or the execution screen of the application) and the at least one object of FIG. 15 may include a user's action of throwing the service (or the application or the execution screen of the application) toward the object and/or a user's action of dragging the service (or the application or the execution screen of the application) to the object and causing the service and the object to collide.

In an embodiment, in operation 1505, when the user's action for the interaction between the application and the object is received, the instructions stored in the memory 120 may cause, when executed individually or collectively by the at least one processor 110, the electronic device 200 to display, through the display (e.g., the display 260 of FIG. 2), a call-to-action (CTA) for inquiring about whether the application is bound with the object.

In an embodiment, in operation 1505, when the user's action for the interaction between the execution screen of the application and the object is received, the instructions stored in the memory 120 may cause, when executed individually or collectively by the at least one processor 110, the electronic device 200 to display, through the display (e.g., the display 260 of FIG. 2), a call-to-action (CTA) for inquiring about whether the execution screen of the application is bound with the object.

In an embodiment, in operation 1505, when the user's action for the interaction between the service and the at least one object is received, the instructions stored in the memory 120 may cause, when executed individually or collectively by the at least one processor 110, the electronic device 200 to display, through the display (e.g., the display 260 of FIG. 2), a call-to-action (CTA) for inquiring about whether the service is bound with the object.

In an embodiment, in operation 1507, when the user agrees to the binding between the object and the application, the instructions stored in the memory 120 may cause, when executed individually or collectively by the at least one processor 110, the electronic device 200 to display, through the display (e.g., the display 260 of FIG. 2), a guide indicating the position at which the application can be disposed near the object in the field of view.

In an embodiment, in operation 1507, when the user agrees to the binding between the object and the execution screen of the application, the instructions stored in the memory 120 may cause, when executed individually or collectively by the at least one processor 110, the electronic device 200 to display, through the display (e.g., the display 260 of FIG. 2), a guide indicating the position at which the execution screen of the application can be disposed near the object in the field of view.

In an embodiment, in operation 1507, when the user agrees to the binding between the object and the service, the instructions stored in the memory 120 may cause, when executed individually or collectively by the at least one processor 110, the electronic device 200 to display, through the display (e.g., the display 260 of FIG. 2), a guide indicating the position at which the service can be disposed near the object in the field of view.

In an embodiment, in operation 1509, the instructions stored in the memory 120 may cause, when executed individually or collectively by the at least one processor 110, the electronic device 200 to bind the application with the object in the field of view and display the application near the object through the display (e.g., the display 260 of FIG. 2) when the application is moved, based on the guide, to the position for the object in the field of view.

In an embodiment, in operation 1509, the instructions stored in the memory 120 may cause, when executed individually or collectively by the at least one processor 110, the electronic device 200 to bind the execution screen of the application with the object in the field of view and display the execution screen of the application near the object through the display (e.g., the display 260 of FIG. 2) when the execution screen of the application is moved, based on the guide, to the position for the object in the field of view.

In an embodiment, in operation 1509, the instructions stored in the memory 120 may cause, when executed individually or collectively by the at least one processor 110, the electronic device 200 to bind the service with the object in the field of view and display the service near the object through the display (e.g., the display 260 of FIG. 2) when the application is moved, based on the guide, to the position for the object in the field of view.

In an embodiment, in operation 1511, the instructions stored in the memory 120 may cause, when executed individually or collectively by the at least one processor 110, the electronic device 200 to store the user's interaction to the object for displaying the bound application near the object.

In an embodiment, in operation 1511, the instructions stored in the memory 120 may cause, when executed individually or collectively by the at least one processor 110, the electronic device 200 to store the user's interaction to the object for displaying the bound execution screen of the application near the object.

In an embodiment, in operation 1511, the instructions stored in the memory 120 may cause, when executed individually or collectively by the at least one processor 110, the electronic device 200 to store the user's interaction to the object for displaying the bound service near the object.

In an embodiment, the interaction between the bound object and service (or the application or the execution screen of the application) may include, for example, an action of tapping the object.

In an embodiment, when the action (or interaction) of tapping the object is detected, the electronic device 200 may display the service (or the application or the execution screen of the application) bound with the object through the display (e.g., the display 260 of FIG. 2).

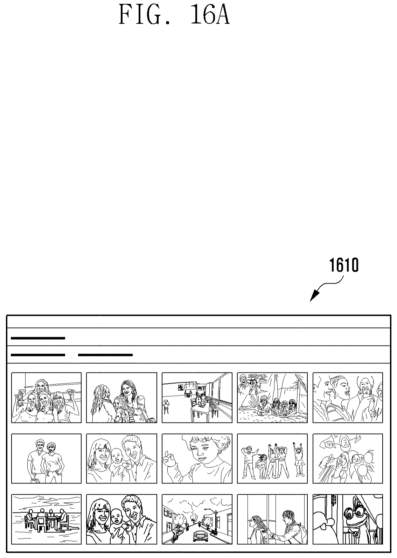

FIG. 16A illustrates an execution screen 1610 of an application being displayed by an electronic device 200 according to an embodiment of the disclosure.

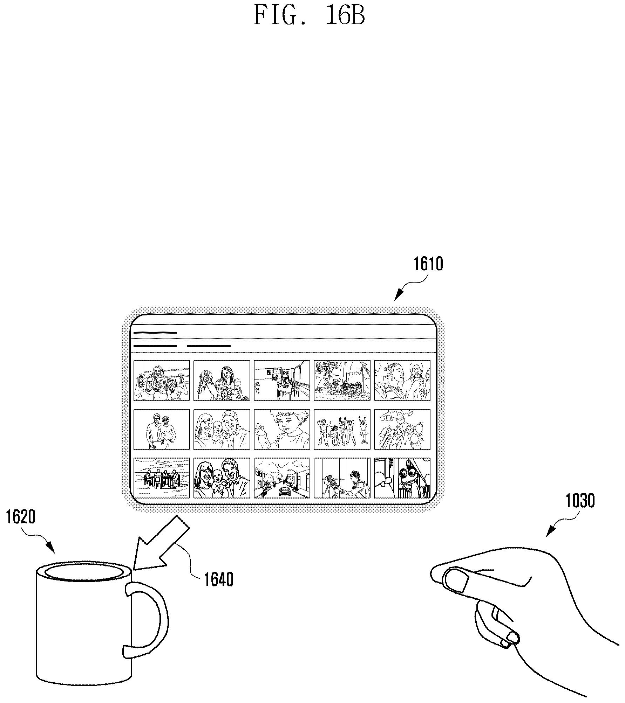

FIG. 16B illustrates a user action 1630 for an interaction between an execution screen 1610 of an application being displayed and an object 1620 according to an embodiment of the disclosure.

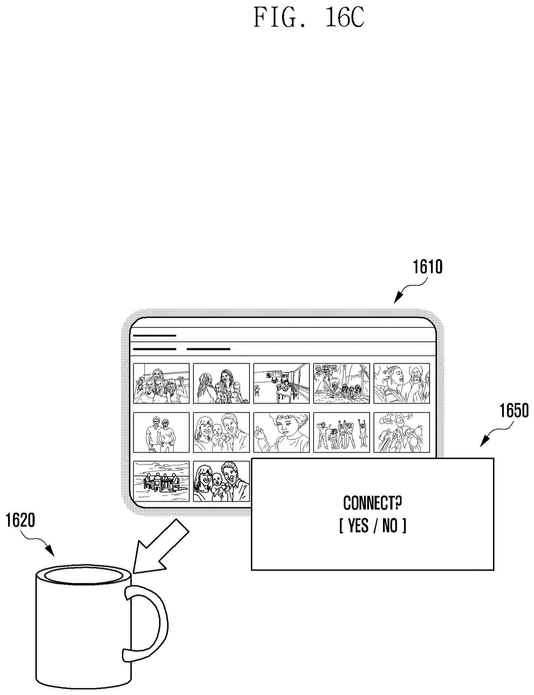

FIG. 16C illustrates an operation of displaying a call-to-action 1650 by an electronic device 200 according to an embodiment of the disclosure.

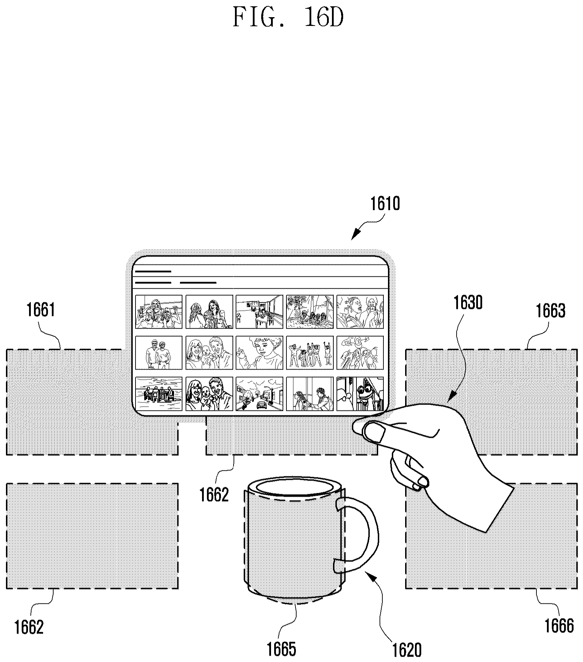

FIG. 16D illustrates an operation of displaying a guide 1660 by an electronic device 200 according to an embodiment of the disclosure.

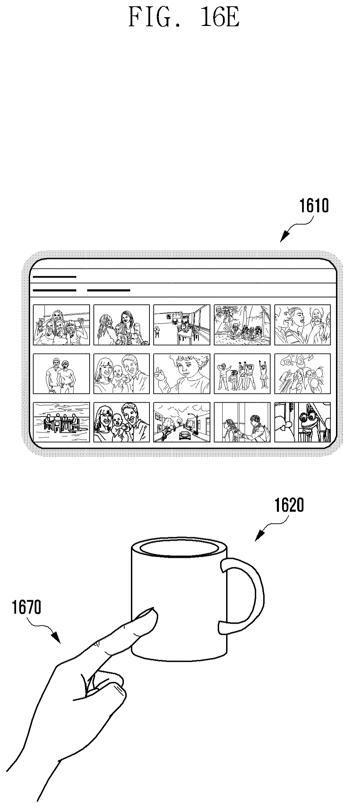

FIG. 16E illustrates an operation in which an electronic device 200 maps an execution screen 1610 of an application to an object 1620 and/or an action 1670 according to an embodiment of the disclosure.

Referring to FIG. 16A, the electronic device 200 may display an execution screen 1610 of an application through a display (e.g., the display 260 of FIG. 2) under the control of the processor 110. The execution screen 1610 of the application may include, for example, a media execution screen.

Referring to FIG. 16B, the electronic device 200 may identify a user's action 1630 for an interaction between the execution screen 1610 of the application and the object (e.g., cup) 1620 under the control of the processor 110.

In an embodiment, the user's action 1630 for the interaction between the execution screen 1610 of the application and the object (e.g., book) 1620 may include a user input causing the object (e.g., cup) 1620 and the service 1610 to collide.

For example, the user's action 1630 for the interaction between the execution screen 1610 of the application and the object (e.g., cup) 1620 of FIG. 16B may include a user's action of throwing the execution screen 1610 of the application toward the object (e.g., cup) 1620 and/or a user's action of dragging the execution screen 1610 of the application to the object (e.g., cup) 1620 and causing the execution screen and the object to collide.

Referring to FIG. 16C, when identifying the user's action to the interaction, the electronic device 200 may display, through the display (e.g., the display 260 of FIG. 2), a call-to-action 1650 for inquiring about whether the execution screen 1610 of the application is bound, under the control of the processor 110. The call-to-action 1650 may include an expression such as "Connect? [yes/no]".

Referring to FIG. 16D, the electronic device 200 may display, through the display (e.g., the display 260 of FIG. 2), at least one guide 1660 indicating the position or area in which the execution screen 1610 of the application can be placed near the object (e.g., cup) 1620, under the control of the processor 110.

The at least one guide 1660 of FIG. 16D may include a first guide 1661, a second guide 1662, a third guide 1663, a fourth guide 1664, a fifth guide 1665, and a sixth guide 1666. The fifth guide 1665 may include an area corresponding to a surface of the object (e.g., cup) 1620. The first guide 1661, the second guide 1662, the third guide 1663, the fourth guide 1664, and the sixth guide 1666 may include an area corresponding to the vicinity of the object (e.g., cup) 1620.

Referring to FIG. 16E, the electronic device 200 may identify and store the user's action (or interaction) for the bound object (e.g., cup) 1620 and execution screen 1610 of the application.

In an embodiment, the user's action (or interaction) for the bound object (e.g., cup) 1620 and execution screen 1610 of the application may include, for example, an action 1670 of tapping the object.

In an embodiment, when the action 1670 of tapping the object is detected, the electronic device 200 may display, through the display (e.g., the display 260 of FIG. 2), the execution screen 1610 of the application, which is bound with the object (e.g., cup) 1620.

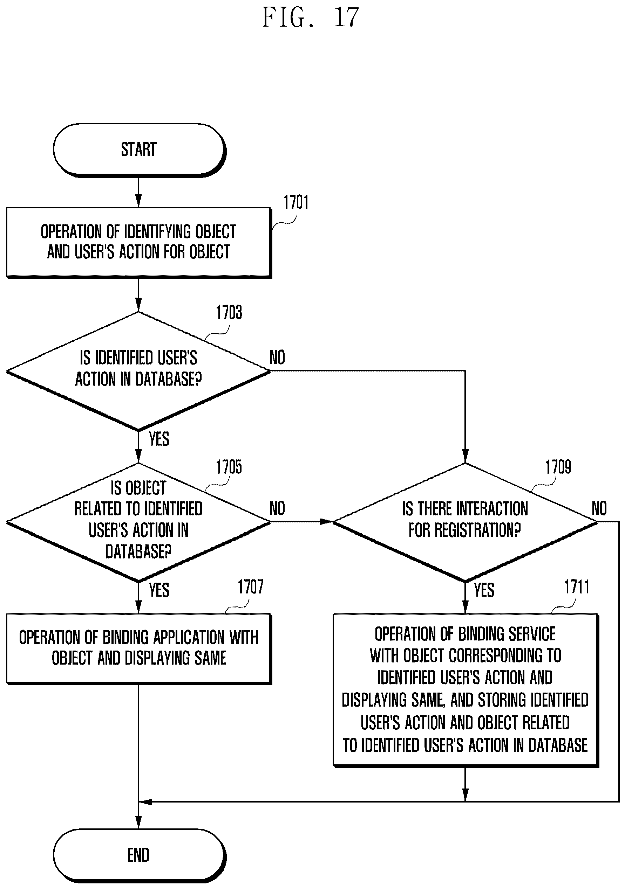

FIG. 17 is a flowchart illustrating an operation of mapping an object and/or an action to an application in an electronic device 200 according to an embodiment of the disclosure.

In an embodiment, in operation 1701, instructions stored in a memory 120 may cause, when executed individually or collectively by at least one processor 110, the electronic device 200 to identify at least one object and a user's action to the object through at least one camera (e.g., an RGB camera or a depth camera).

In an embodiment, in operation 1701, the instructions stored in the memory 120 may cause, when executed individually or collectively by the at least one processor 110, a head-mounted display device 200 to acquire real-world images through the at least one camera (e.g., the RGB camera or the depth camera).

In an embodiment, in operation 1703, the instructions stored in the memory 120 may cause, when executed individually or collectively by the at least one processor 110, the electronic device 200 to identify whether the identified user's action is in a database or is classified by an artificial intelligence engine.

In an embodiment, when the identified user's action is in the database or is classified by the artificial intelligence engine, the electronic device 200 may be branch from operation 1703 to operation 1705.

In an embodiment, when the identified user 's action is not in the database or is not classified by the artificial intelligence engine, the electronic device 200 may branch from operation 1703 to operation 1709.

In an embodiment, when the identified user's action is in the database or is classified by the artificial intelligence engine, in operation 1705, the instructions stored in the memory 120 may cause, when executed individually or collectively by the at least one processor 110, the electronic device 200 to identify whether an object related to the identified action is in a database or whether the object related to the identified action is classified by the artificial intelligence engine.

In an embodiment, when the object related to the identified action is in the database or the object related to the identified object is classified by the artificial intelligence engine, the electronic device 200 may branch from operation 1705 to operation 1707.

In an embodiment, when the object related to the identified action is not in the database or the identified action is not classified by the artificial intelligence engine, the electronic device 200 may branch from operation 1705 to operation 1709.

In an embodiment, in operation 1707, the instructions stored in the memory 120 may cause, when executed individually or collectively by the at least one processor 110, the electronic device 200 to bind the application with the object and display the same near the object or on the object in the field of view through the display (e.g., the display 260 of FIG. 2).

In an embodiment, in operation 1707, the instructions stored in the memory 120 may cause, when executed individually or collectively by the at least one processor 110, the electronic device 200 to bind an execution screen of the application with the object and display the same near the object or one the object in the field of view through the display (e.g., the display 260 of FIG. 2).

In an embodiment, in operation 1707, the instructions stored in the memory 120 may cause, when executed individually or collectively by the at least one processor 110, the electronic device 200 to bind the service with the object and display the same near the object or on the object through the display (e.g., the display 260 of FIG. 2).

In an embodiment, in operation 1709, the instructions stored in the memory 120 may cause, when executed individually or collectively by the at least one processor 110, the electronic device 200 to determine whether there is an interaction for registration.

For example, the interaction for registration of FIG. 17 may include a user's action of throwing a service toward at least one object and/or a user's action of dragging a service (or an application or an execution screen of the application) to the object and causing the service and the object to collide.

In an embodiment, when there is the interaction for registration, in operation 1711, the instructions stored in the memory 120 may cause, when executed individually or collectively by the at least one processor 110, the electronic device 200 to bind an object corresponding to the identified user's action with the application and display the application on the object in the field of view.

In an embodiment, when there is the interaction for registration, in operation 1711, the instructions stored in the memory 120 may cause, when executed individually or collectively by the at least one processor 110, the electronic device 200 to bind the object corresponding to the identified user's action with the execution screen of the application and display the execution screen of the application on the object in the field of view.

In an embodiment, when there is the interaction for registration, in operation 1711, the instructions stored in the memory 120 may cause, when executed individually or collectively by the at least one processor 110, the electronic device 200 to bind the object corresponding to the identified user's action with the service and display the service on the object in the field of view.

In an embodiment, when there is the interaction for registration, in operation 1711, the instructions stored in the memory 120 may cause, when executed individually or collectively by the at least one processor 110, the electronic device 200 to store, in a database, the identified user's action (or interaction) and the identified object related to the user's action (or interaction).

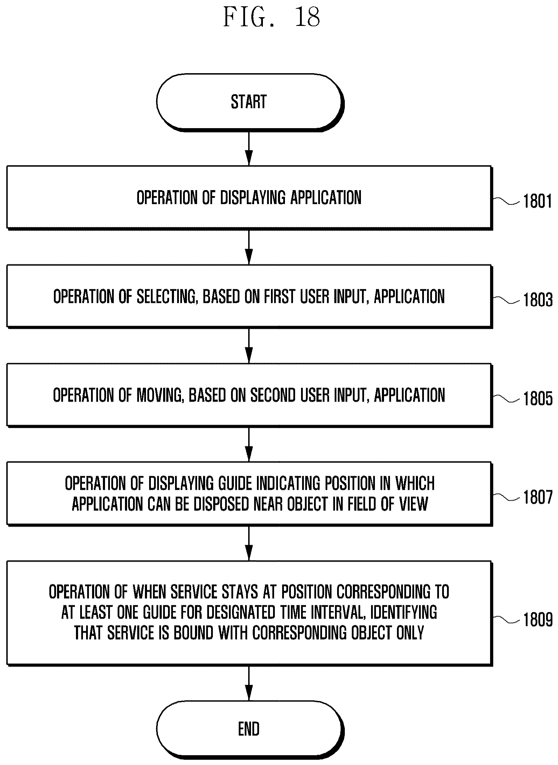

FIG. 18 is a flowchart illustrating an operation of binding an object with an application in an electronic device 200 according to an embodiment of the disclosure.

In an embodiment, in operation 1801, instructions stored in a memory 120 may cause, when executed individually or collectively by at least one processor 110, the electronic device 200 to display an application through a display (e.g., the display 260 of FIG. 2).

In an embodiment, in operation 1801, the instructions stored in the memory 120 may cause, when executed individually or collectively by the at least one processor 110, the electronic device 200 to display an execution screen of the application through the display (e.g., the display 260 of FIG. 2).

In an embodiment, in operation 1801, the instructions stored in the memory 120 may cause, when executed individually or collectively by the at least one processor 110, the electronic device 200 to display a service through the display (e.g., the display 260 of FIG. 2).

However, the disclosure is not limited thereto. In an embodiment, in operation 1801, the instructions stored in the memory 120 may cause, when executed individually or collectively by the at least one processor 110, the electronic device 200 to display the service (or the application or the execution screen of the application) with an object through the display (e.g., the display 260 of FIG. 2).

In an embodiment, in operation 1803, the instructions stored in the memory 120 may cause, when executed individually or collectively by the at least one processor 110, the electronic device 200 to select, based on a first user input, an application.

In an embodiment, in operation 1803, the instructions stored in the memory 120 may cause, when executed individually or collectively by the at least one processor 110, the electronic device 200 to select, based on the first user input, an execution screen of the application.

In an embodiment, in operation 1803, the instructions stored in the memory 120 may cause, when executed individually or collectively by the at least one processor 110, the electronic device 200 to select, based on the first user input, a service.

For example, the first user input of FIG. 18 may include a user action of holding the service (or the application or the execution screen of the application) being displayed through the display (e.g., the display 260 of FIG. 2). The electronic device 200 may acquire the first user input in the real world through at least one camera (e.g., an RGB camera or a depth camera) under the control of the processor 110. The electronic device 200 may determine, based on a computer program for action recognition, whether the acquired first user input is a user's action of holding the service (or the application or the execution screen of the application) bound with the object and displayed, under the control of the processor 110.

In an embodiment, in operation 1805, the instructions stored in the memory 120 may cause, when executed individually or collectively by the at least one processor 110, the electronic device 200 to move, based on a second user input, the application.

In an embodiment, in operation 1805, the instructions stored in the memory 120 may cause, when executed individually or collectively by the at least one processor 110, the electronic device 200 to move, based on the second user input, the execution screen of the application.

In an embodiment, in operation 1805, the instructions stored in the memory 120 may cause, when executed individually or collectively by the at least one processor 110, the electronic device 200 to move, based on the second user input, the service.

In an embodiment, in operation 1805, the instructions stored in the memory 120 may cause, when executed individually or collectively by the at least one processor 110, the electronic device 200 to move the service (or the application or the execution screen of the application) according to the second user input and display the same through the display (e.g., the display 260 of FIG. 2).

For example, the second user input of FIG. 18 may include a user action of holding and moving the service (or the application or the execution screen of the application) being displayed through the display (e.g., the display 260 of FIG. 2). The second user input may include an input consecutive to the first user input. The electronic device 200 may acquire the second user input in the real world through at least one camera (e.g., an RGB camera or a depth camera) under the control of the processor 110. The electronic device 200 may determine, based on a computer program for action recognition, whether the acquired second user input is the user's action of holding and moving the service (or the application or the execution screen of the application) bound with the object and displayed.

In an embodiment, in operation 1807, when the application is moved based on the second user input, the instructions stored in the memory 120 may cause, when executed individually or collectively by the at least one processor 110, the electronic device 200 to display, through the display (e.g., the display 260 of FIG. 2), a guide indicating the position at which the application can be disposed near the object in the field of view.

In an embodiment, in operation 1807, when the execution screen of the application is moved based on the second user input, the instructions stored in the memory 120 may cause, when executed individually or collectively by the at least one processor 110, the electronic device 200 to display, through the display (e.g., the display 260 of FIG. 2), a guide indicating the position at which the execution screen of the application can be disposed near the object in the field of view.

In an embodiment, in operation 1507, when the service is moved based on the second user input, the instructions stored in the memory 120 may cause, when executed individually or collectively by the at least one processor 110, the electronic device 200 to display, through the display (e.g., the display 260 of FIG. 2), a guide indicating the position at which the service can be disposed near the object in the field of view.

In an embodiment, the position or area in which the service (or the application or the execution screen of the application) can be placed near at least one object may include a surface of the object and/or an area spaced apart from the object by a predetermined distance.

In an embodiment, in operation 1809, the instructions stored in the memory 120 may cause, when executed individually or collectively by the at least one processor 110, the electronic device 200 to identify that the application is bound with the object in the field of view when the application moved according to the second user input stays for a designated time interval at the position corresponding to the guide.

In an embodiment, in operation 1809, the instructions stored in the memory 120 may cause, when executed individually or collectively by the at least one processor 110, the electronic device 200 to identify that the execution screen of the application is bound with the object in the field of view when the execution screen of the application moved according to the second user input stays for a designated time interval at the position corresponding to the guide.

In an embodiment, in operation 1809, the instructions stored in the memory 120 may cause, when executed individually or collectively by the at least one processor 110, the electronic device 200 to identify that the service is bound with the object in the field of view when the service moved according to the second user input stays for a designated time interval at the position corresponding to the guide.

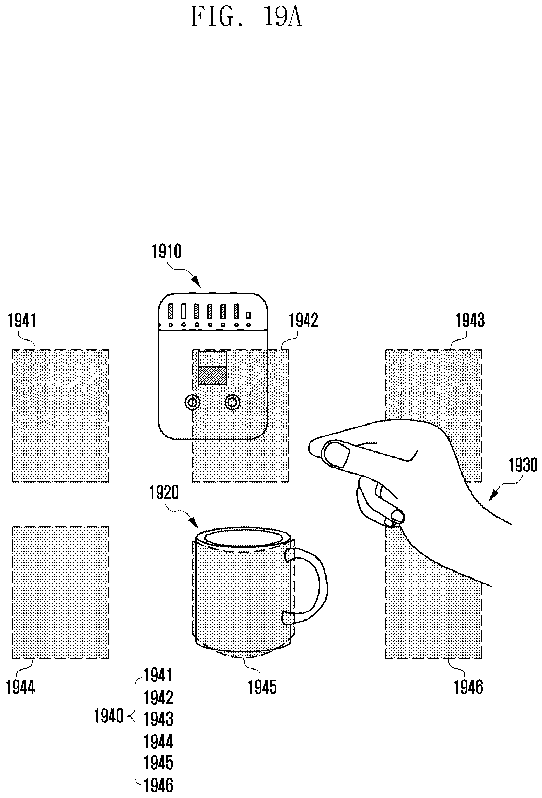

FIG. 19A illustrates a guide 1940 displayed on a display (e.g., the display 260) according to an execution screen 1910 of an application according to an embodiment of the disclosure.

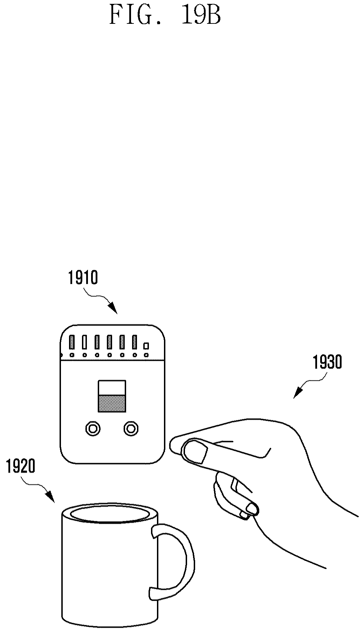

FIG. 19B illustrates a case where an execution screen 1910 of an application stays, for a designated time interval, at a guide 1940 displayed on a display (e.g., the display 260) according to movement of the execution screen of the application according to an embodiment of the disclosure.

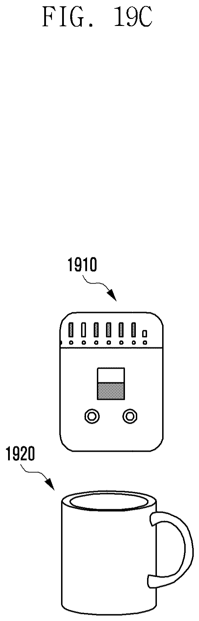

FIG. 19C illustrates a state in which an execution screen 1910 of an application is bound with a specific object 1920 according to an embodiment of the disclosure.

Referring to FIG. 19A, when the execution screen 1910 of the application is moved according to a user input 1930, the electronic device 200 may display, through the display (e.g., the display 260 of FIG. 2), at least one guide 1940 indicating the position or area in which the service can be placed around an object (e.g., colored cup) 1920 under the control of the processor 110.

The at least one guide 1940 of FIG. 19A may include a first guide 1941, a second guide 1942, a third guide 1943, a fourth guide 1944, a fifth guide 1945, and a sixth guide 1946. The fifth guide 1945 may include an area corresponding to the surface of the object (e.g., colored cup) 1910. The first guide 1941, the second guide 1942, the third guide 1943, the fourth guide 1944, and the sixth guide 1946 may include an area corresponding to the vicinity of the object (e.g., cup) 1910.

Referring to FIGS. 19B and 19C, when the execution screen 1910 of the application is moved according to the user input 1930, the electronic device 200 to identify that the execution screen 1910 of the application is bound with the object (e.g., colored cup) 1910 when the execution screen 1910 of the application moved according to the second user input 1930 stays for a designated time interval at the position corresponding to at least one guide (e.g., the second guide 1942).

In an embodiment, an electronic device worn on a user's head may comprise: a display; at least one camera; and at least one processor. Instructions stored in a memory, when executed individually or collectively by the at least one processor, may cause the electronic device to: acquire, through the at least one camera, images corresponding to a field of view of a user wearing the electronic device; identify, based on the images acquired through the at least one camera, an object existing in a surrounding environment; identify, based on the identified object, an application to be provided; and display, through the display, an execution screen of the application at a position corresponding to the object in the field of view of the user.

In an embodiment, an electronic device 200 worn on a head of a user may include a display 260, 140, 314-1, or 314-2, at least one camera 280, 313, 312, 311-1, 311-2, 430a, 430b, or 430c (e.g., an RGB camera and/or a depth camera), and at least one processor 220 or 110, wherein instructions stored in a memory 230 or 120, when executed individually or collectively by the at least one processor 220 or 110, cause the electronic device 200 to acquire, through the at least one camera 280, 313, 312, 311-1, 311-2, 430a, 430b, or 430c (e.g., the RGB camera and/or the depth camera), images corresponding to a field of view of a user wearing the electronic device 200, identify, based on the images acquired through the at least one camera 280, 313, 312, 311-1, 311-2, 430a, 430b, or 430c (e.g., the RGB camera and/or the depth camera), an object existing in a surrounding environment, identify, based on the images acquired through the at least one camera 280, 313, 312, 311-1, 311-2, 430a, 430b, or 430c (e.g., the RGB camera and/or the depth camera), the user's action related to the object, identify, based on the identified object and the identified action, an application to be provided, and display, through the display 260, 140, 314-1, or 314-2, an application execution screen at a position corresponding to the object in the field of view of the user.

The electronic device may be arranged to display the acquired images to the user through the display. Alternatively or in addition, the electronic device may comprise a display which may be at least partially transparent or translucent.

The instructions, when executed individually or collectively by the at least one processor, may cause the electronic device to: display, through the display, the execution screen of the application at a first position, the first position corresponding to a first location of the object in the field of view of the user; detect a movement of the object relative to the user from the first location to a second location; and display, through the display, the execution screen of the application at a second position, the second position corresponding to the second location.

In an embodiment, the instructions, when executed individually or collectively by the at least one processor 220 or 110, may cause the electronic device 200 to select, based on a first user input, the application, move, based on a second user input, the execution screen of the application, display a guide indicating a position at which the execution screen can be disposed near the object in the field of view of the user, and in case that the execution screen moves, based on the guide, to the position of the object in the field of view of the user, bind the execution screen with the object in the field of view of the user and display the execution screen through the display 260, 140, 314-1, or 314-2.

In an embodiment, the instructions, when executed individually or collectively by the at least one processor 220 or 110, may cause the electronic device 200 to select, based on a first user input, the application, and in case that a third user input causing the object and the execution screen to collide in the field of view of the user is received, bind the execution screen with the object in the field of view of the user and display the execution screen through the display 260, 140, 314-1, or 314-2.

In an embodiment, the instructions, when executed individually or collectively by the at least one processor 220 or 110, cause the electronic device 200 to display multiple applications, select, based on a first user input, a first application, move, based on a second user input, an execution screen of the selected first application, display a guide indicating a position at which the execution screen of the first application can be disposed near the object in the field of view of the user, in case that the execution screen of the first application moves, based on the guide, to the position of the object in the field of view of the user, bind the execution screen of the first application with the object in the field of view of the user and display the execution screen near the object through the display 260, 140, 314-1, or 314-2, in case that a third user input for a second application is received, identify the position of the object in the field of view of the user, at which an execution screen of the second application can be disposed, with reference to the position of the execution screen of the first application, and bind the execution screen of the first application and the execution screen of the second application with the object in the field of view of the user and display the same near the object through the display 260, 140, 314-1, or 314-2.

In an embodiment, the instructions, when executed individually or collectively by the at least one processor 220 or 110, may cause the electronic device 200 to display the application, identify an interaction between the execution screen of the application and the object, display a call-to-action for inquiring about whether the execution screen of the application is bound with the object, display a guide indicating a position at which the execution screen of the application can be disposed near the object in the field of view of the user, in case that the execution screen of the application moves, based on the guide, to the position of the object in the field of view of the user, bind the execution screen of the application with the object in the field of view of the user and display the execution screen near the object through the display 260, 140, 314-1, or 314-2, and store the user's interaction with the object for displaying the bound execution screen of the application near the object.

In an embodiment, the instructions, when executed individually or collectively by the at least one processor 220 or 110, may cause the electronic device 200 to identify the object and the user's action related to the object, identify whether the identified action is in a database or is classified by an artificial intelligence engine, in case that the identified action is in the database or is classified by the artificial intelligence engine, identify whether the object related to the identified action is in the database or is classified by the artificial intelligence engine, and in case that the object related to the identified action is in the database or is classified by the artificial intelligence engine, bind the execution screen of the application with the object and display the same near the object or on the object in the field of view of the user.

In an embodiment, the instructions, when executed individually or collectively by the at least one processor 220 or 110, may cause the electronic device 200 to in case that the identified action is not in the database, the object related to the identified action is not in the database, the identified action is not classified by the artificial intelligence engine, or the object related to the identified action is not classified by the artificial intelligence engine, identify whether an interaction between the object and the user for registration is in the database, in case that there is the interaction, bind the object related to the interaction with the execution screen of the application corresponding to the interaction, and store the object related to the interaction in the database.

In an embodiment, the instructions, when executed individually or collectively by the at least one processor 220 or 110, may cause the electronic device 200 to display the execution screen of the application, select, based on a first user input, the application, moves, based on a second user input, the execution screen of the application, display a guide indicating a position at which the execution screen of the application can be disposed near an object in the field of view of the user, and in case that the execution screen of the application stays, based on the guide, at the position for the object for a designated time interval in the field of view of the user, identify binding of the execution screen of the application with the object in the field of view of the user.

In an embodiment, the second user input may be consecutive to the first user input.

In an embodiment, the third user input may include a gesture of throwing the execution screen of the application to the at least one object.

In an embodiment, a method for providing a service by an electronic device may comprise: acquiring, through at least one camera, images corresponding to a field of view of a user wearing the electronic device; identifying, based on the images acquired through the at least one camera, an object existing in a surrounding environment; identifying, based on the identified object, an application to be provided; and displaying, through the display, an execution screen of the application at a position corresponding to the object in the field of view of the user.

In an embodiment, a method for providing a service by an electronic device 200 may include acquiring, through at least one camera 280, 313, 312, 311-1, 311-2, 430a, 430b, or 430c (e.g., an RGB camera and/or a depth camera), images corresponding to a field of view of a user wearing the electronic device, identifying, based on the images acquired through the at least one camera 280, 313, 312, 311-1, 311-2, 430a, 430b, or 430c (e.g., the RGB camera and/or the depth camera), an object existing in a surrounding environment, identifying, based on the images acquired through the at least one camera 280, 313, 312, 311-1, 311-2, 430a, 430b, or 430c (e.g., the RGB camera and/or the depth camera), the user's action related to the object, identifying, based on the identified object and the identified action, an application to be provided, and displaying, through the display 260, 140, 314-1, or 314-2, an application execution screen at a position corresponding to the object in the field of view of the user.

The electronic device may be arranged to display the acquired images to the user through the display. Alternatively or in addition, the electronic device may comprise a display which may be at least partially transparent or translucent.

The method may further comprise: displaying, through the display, the execution screen of the application at a first position, the first position corresponding to a first location of the object in the field of view of the user; detecting a movement of the object relative to the user from the first location to a second location; and displaying, through the display, the execution screen of the application at a second position, the second position corresponding to the second location.

In an embodiment, the method for providing a service by the electronic device 200 may further include selecting, based on a first user input, the application, moving, based on a second user input, the execution screen of the application, displaying a guide indicating a position at which the execution screen can be disposed near the object in the field of view of the user, and in case that the execution screen moves, based on the guide, to the position of the object in the field of view of the user, binding the execution screen with the object in the field of view of the user and displaying the execution screen through the display 260, 140, 314-1, or 314-2.

In an embodiment, the method for providing a service by the electronic device 200 may further include selecting, based on a first user input, the application, and in case that a third user input causing the object and the execution screen to collide in the field of view of the user is received, binding the execution screen with the object in the field of view of the user and displaying at least a part of the execution screen through the display 260, 140, 314-1, or 314-2.

In an embodiment, the method for providing a service by the electronic device 200 may further include displaying multiple applications, selecting, based on a first user input, a first application, moving, based on a second user input, an execution screen of the selected first application, displaying a guide indicating a position at which the execution screen of the first application can be disposed near the object in the field of view of the user, in case that the execution screen of the first application moves, based on the guide, to the position of the object in the field of view of the user, binding the execution screen of the first application with the object in the field of view of the user and displaying the execution screen near the object through the display 260, 140, 314-1, or 314-2, in case that a third user input for a second application is received, identifying the position of the object in the field of view of the user, at which an execution screen of the second application can be disposed, with reference to the position of the execution screen of the first application, and binding the execution screen of the first application and the execution screen of the second application with the object in the field of view of the user and displaying the same near the object through the display 260, 140, 314-1, or 314-2.

In an embodiment, the method for providing a service by the electronic device 200 may further include displaying the execution screen of the application, identifying an interaction between the execution screen of the application and the object, displaying a call-to-action for inquiring about whether the execution screen of the application is bound with the object, displaying a guide indicating a position at which the execution screen of the application can be disposed near the object in the field of view of the user, in case that the execution screen of the application moves, based on the guide, to the position of the object in the field of view of the user, binding the execution screen of the application with the object in the field of view of the user and displaying the execution screen near the object through the display 260, 140, 314-1, or 314-2, and storing the user's interaction with the object for displaying the bound execution screen of the application near the object.

In an embodiment, the method for providing a service by the electronic device 200 may further include identifying the object and the user's action related to the object, identifying whether the identified action is in a database or is classified by an artificial intelligence engine, in case that the identified action is in the database or is classified by the artificial intelligence engine, identifying whether the object related to the identified action is in the database or is classified by the artificial intelligence engine, and in case that the object related to the identified action is in the database or is classified by the artificial intelligence engine, binding the execution screen of the application with the object and displaying the same near the object or on the object in the field of view of the user.

In an embodiment, the method for providing a service by the electronic device 200 may further include in case that the identified action is not in the database, the object related to the identified action is not in the database, the identified action is not classified by the artificial intelligence engine, or the object related to the identified action is not classified by the artificial intelligence engine, identifying whether an interaction between the object and the user for registration is in the database, in case that there is the interaction, binding the object related to the interaction with the execution screen of the application corresponding to the interaction, and storing the object related to the interaction in the database.

In an embodiment, the method for providing a service by the electronic device 200 may further include displaying the execution screen of the application, selecting, based on a first user input, the application, moving, based on a second user input, the execution screen of the application, displaying a guide indicating a position at which the execution screen of the application can be disposed near an object in the field of view of the user, and in case that the execution screen of the application stays, based on the guide, at the position for the object for a designated time interval in the field of view of the user, identifying binding of the execution screen of the application with the object in the field of view of the user.

The electronic device according to an embodiment may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that an embodiment and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". The "module" may be a single integrated component, or a minimum unit or part thereof, adapted to perform one or more functions. For example, according to an embodiment, the "module" may be implemented in the form of an application-specific integrated circuit (ASIC).

An embodiment as set forth herein may be implemented as software (e.g., a program) including one or more instructions that are stored in a storage medium (e.g., an internal memory or external memory) that is readable by a machine (e.g., the electronic device 100). For example, a processor (e.g., the processor 100) of the machine (e.g., the electronic device 110) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each element (e.g., a module or a program) of the above-described elements may include a single entity or multiple entities, and some of the multiple entities may also be separately disposed in another element. According to an embodiment, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device worn on a user's head, the electronic device comprising:
a display;
at least one camera; and
at least one processor,
wherein instructions stored in a memory, when executed individually or collectively by the at least one processor, cause the electronic device to:
acquire, through the at least one camera, images corresponding to a field of view of a user wearing the electronic device;
identify, based on the images acquired through the at least one camera, an object existing in a surrounding environment;
identify, based on the images acquired through the at least one camera, the user's action related to the object;
identify, based on the identified object and the identified action, an application to be provided; and
display, through the display, an execution screen of the application at a position corresponding to the object in the field of view of the user.

2. The electronic device of claim 1, wherein the instructions, when executed individually or collectively by the at least one processor, cause the electronic device to:
select, based on a first user input, the application;
move, based on a second user input, the execution screen of the application;
display a guide indicating a position at which the execution screen can be disposed near the object in the field of view of the user; and
in case that the execution screen moves, based on the guide, to the position corresponding to the object in the field of view of the user, bind the execution screen with the object in the field of view of the user and display the execution screen through the display.

3. The electronic device of claim 1, wherein the instructions, when executed individually or collectively by the at least one processor, cause the electronic device to:
select, based on a first user input, the application; and
in case that a third user input causing the object and the execution screen to collide in the field of view of the user is received, bind the execution screen with the object in the field of view of the user and display the execution screen through the display.

4. The electronic device of claim 1, wherein the instructions, when executed individually or collectively by the at least one processor, cause the electronic device to:
display multiple applications;
select, based on a first user input, a first application;
move, based on a second user input, an execution screen of the selected first application;
display a guide indicating a position at which the execution screen of the first application can be disposed near the object in the field of view of the user;
in case that the execution screen of the first application moves, based on the guide, to the position corresponding to the object in the field of view of the user, bind the execution screen of the first application with the object in the field of view of the user and display the execution screen near the object through the display;
in case that a third user input for a second application is received, identify, with reference to the position of the execution screen of the first application, the position of the object in the field of view of the user, at which an execution screen of the second application can be disposed; and
bind the execution screen of the first application and the execution screen of the second application with the object in the field of view of the user and display the same near the object through the display.

5. The electronic device of claim 1, wherein the instructions, when executed individually or collectively by the at least one processor, cause the electronic device to:
display the application;
identify an interaction between the execution screen of the application and the object;
display a call-to-action for inquiring about whether the execution screen of the application is bound with the object;
display a guide indicating a position at which the execution screen of the application can be disposed near the object in the field of view of the user;
in case that the execution screen of the application moves, based on the guide, to the position corresponding to the object in the field of view of the user, bind the execution screen of the application with the object in the field of view of the user and display the execution screen near the object through the display; and
store the user's interaction with the object for displaying the bound execution screen of the application near the object.

6. The electronic device of claim 1, wherein the instructions, when executed individually or collectively by the at least one processor, cause the electronic device to:
identify the object and the user's action related to the object;
identify whether the identified action is in a database or is classified by an artificial intelligence engine;
in case that the identified action is in the database or is classified by the artificial intelligence engine, identify whether the object related to the identified action is in the database or is classified by the artificial intelligence engine; and
in case that the object related to the identified action is in the database or is classified by the artificial intelligence engine, bind the execution screen of the application with the object and display the execution screen near the object or on the object in the field of view of the user.

7. The electronic device of claim 6, wherein the instructions, when executed individually or collectively by the at least one processor, cause the electronic device to:
in case that the identified action is not in the database, the object related to the identified action is not in the database, the identified action is not classified by the artificial intelligence engine, or the object related to the identified action is not classified by the artificial intelligence engine, identify whether an interaction between the object and the user for registration is in the database;
in case that the interaction is in the database, bind the object related to the interaction with the execution screen of the application corresponding to the interaction; and
store the object related to the interaction in the database.

8. The electronic device of claim 1, wherein the instructions, when executed individually or collectively by the at least one processor, cause the electronic device to:
display the execution screen of the application;
select, based on a first user input, the application;
moves, based on a second user input, the execution screen of the application;
display a guide indicating a position at which the execution screen of the application can be disposed near an object in the field of view of the user; and
in case that the execution screen of the application stays, based on the guide, at the position corresponding to the object for a designated time interval in the field of view of the user, identify binding of the execution screen of the application with the object in the field of view of the user.

9. The electronic device of claim 2, wherein the second user input is consecutive to the first user input.

10. The electronic device of claim 3, wherein the third user input comprises a gesture of throwing the execution screen of the application to the at least one object.

11. A method for providing a service by an electronic device, the method comprising:
acquiring, through at least one camera, images corresponding to a field of view of a user wearing the electronic device;
identifying, based on the images acquired through the at least one camera, an object existing in a surrounding environment;
identifying, based on the images acquired through the at least one camera, the user's action related to the object;
identifying, based on the identified object and the identified action, an application to be provided; and
displaying, through the display, an execution screen of the application at a position corresponding to the object in the field of view of the user.

12. The method of claim 11, further comprising:
selecting, based on a first user input, the application;
moving, based on a second user input, the execution screen of the application;
displaying a guide indicating a position at which the execution screen can be disposed near the object in the field of view of the user; and
in case that the execution screen moves, based on the guide, to the position corresponding to the object in the field of view of the user, binding the execution screen with the object in the field of view of the user and displaying the execution screen through the display.

13. The method of claim 11, further comprising:
selecting, based on a first user input, the application; and
in case that a third user input causing the object and the execution screen to collide in the field of view of the user is received, binding the execution screen with the object in the field of view of the user and displaying at least a part of the execution screen through the display.

14. The method of claim 11, further comprising:
displaying multiple applications;
selecting, based on a first user input, a first application;
moving, based on a second user input, an execution screen of the selected first application;
displaying a guide indicating a position at which the execution screen of the first application can be disposed near the object in the field of view of the user;
in case that the execution screen of the first application moves, based on the guide, to the position corresponding to the object in the field of view of the user, binding the execution screen of the first application with the object in the field of view of the user and displaying the execution screen near the object through the display;
in case that a third user input for a second application is received, identifying, with reference to the position of the execution screen of the first application, the position of the object in the field of view of the user, at which an execution screen of the second application can be disposed; and
binding the execution screen of the first application and the execution screen of the second application with the object in the field of view of the user and displaying the execution screen near the object through the display.

15. The method of claim 11, further comprising:
displaying the execution screen of the application;
identifying an interaction between the execution screen of the application and the object;
displaying a call-to-action for inquiring about whether the execution screen of the application is bound with the object;
displaying a guide indicating a position at which the execution screen of the application can be disposed near the object in the field of view of the user;
in case that the execution screen of the application moves, based on the guide, to the position corresponding to the object in the field of view of the user, binding the execution screen of the application with the object in the field of view of the user and displaying the execution screen near the object through the display; and
storing the user's interaction with the object for displaying the bound execution screen of the application near the object.
